# EUROPÄISCHE PATENTSCHRIFT

(11) **EP 0 683 742 B1**
(45) Veröffentlichungstag und Bekanntmachung des Hinweises auf die Patenterteilung: **18.12.1996**
(21) Anmeldenummer: 94906832.4
(22) Anmeldetag: 02.02.1994
(51) Int. Cl.: B62D 55/20, B65G 17/38

(54) **KETTENGLIED FÜR GLEISKETTEN**
TRACK LINK FOR TRACKED CRAWLERS
MAILLON POUR CHENILLES

(30) Priorität: 10.02.1993 DE 4303785
(43) Veröffentlichungstag der Anmeldung: 29.11.1995
(73) Patentinhaber: INTERTRACTOR AKTIENGESELLSCHAFT, D-58285 Gevelsberg (DE)
(72) Erfinder: KETTING, Michael, D-58256 Ennepetal (DE); PIETZSCH, Christoph, D-08485 Lengenfeld (DE)
(74) Vertreter: Patentanwälte Dipl.-Ing. Conrad Köchling Dipl.-Ing. Conrad-Joachim Köchling
(86) Internationale Anmeldenummer: DE9400110
(87) Internationale Veröffentlichungsnummer: WO9418053

(56) Entgegenhaltungen:
- FR-A- 1 145 567

## Beschreibung

Die Erfindung betrifft ein Kettenglied für Gleisketten, beispielsweise gekröpfte Gliedausführung, Förderketten, beispielsweise nicht gekröpfte Gliedausführung, oder für ähnliche Kettentypen sowie ein Leitrad zur Führung und/oder Umlenkung bzw. zum Spannen von Gleisketten, Transportketten oder ähnlichen Kettenausführungsformen sowie eine Tragrolle zur Abstützung und Führung von Gleisketten, Transportketten und/oder ähnlichen Kettentypen sowie Laufrollen zur Gewährleistung der Rollfunktion und Übernahme der Krafteinwirkung in bezug auf durch Gleisketten, Transportketten und/oder kettenähnlicher Ausführungsform und Funktionen notwendig werdender Ablaufmechanismen.

Solche Bauteile sind im Stand der Technik vielfach bekannt. Bei den bekannten Bauteilen weist der Laufflächenbereich üblicher Weise eine lineare oder nahezu lineare Kontur auf, so daß nahezu geradlinige Laufflächen an den miteinander korrespondierenden Flächen der Bauteile verwirklicht sind. Diese konstruktive Lösung ist zwar kinematisch günstig, und zwar im Hinblick auf die Bewegungsabläufe zwischen Leitrad, Tragrolle und Kettenglied, jedoch ist diese bekannte konstruktive Lösung in bezug auf den auftretenden Verschleiß und in bezug auf ein optimales Festigkeitsverhalten ungünstig. Bei den gemäß Stand der Technik ausgeführten Bauteilen führen die im Betrieb auftretenden Druckkräfte infolge der Kraftaufteilung zum Abplatzen von Randbereichen vor allem des Kettengliedes.

Ausgehend von diesem Stand der Technik liegt der Erfindung die Aufgabe zugrunde, Bauteile gattungsgemäßer Art zu schaffen, bei denen die bei bestimmungsgemäßem Gebrauch auftretenden Druckkräfte weitestgehend in Kraftvektoren aufgeteilt werden, die radial zur Lauffläche des Kettengliedes bzw. radial zur Lauffläche des Leitrades oder der Tragrolle oder Laufrolle gerichtet sind oder zum gliedinneren, zum leitradinneren oder zum tragrolleninneren Bereich gerichtet sind, nicht aber zu den Randkanten der Lauffläche von Kettenglied, Leitrad, Lauf- oder Tragrolle.

Zur Lösung dieser Aufgabe schlägt die Erfindung vor, daß die Laufflächenkontur des Gliedes im Querschnitt des Laufflächenkopfes quer (90°) zur Laufrichtung einer nichtlinearen Funktion entspricht, vorzugsweise einer korbbogenartig konvex gewölbten Kurve bezogen auf die gesamte Lauffläche, die einer festigkeits- und/oder verschleißoptimalen Rollflächengeometrie entspricht oder zumindest angenähert ist, wobei die Form des Laufflächenkopfes in der Weise ausgeführt ist, wie sie sich auf der Grundlage des physikalischen Prinzips des kleinsten Zwanges bei einer normalen betriebsbedingten Bewegung zwischen einem Kettenglied und einer entsprechenden Rollfläche, beispielsweise einer Laufrolle, bei hinreichend langer Bewegungsdauer selbständig einstellt.

Dadurch, daß die Laufflächenkontur des Kettengliedes so ausgebildet wird, daß die im Betrieb auftretenden Durckkräfte im wesentlichen radial zur Schwenkachse des Gliedes oder zum Gliedinneren gerichtet sind, wird eine verschleiß- und vor allem festigkeitsoptimale Form realisiert, oder aber die Form stellt sich zumindest nach relativ kurzzeitiger betriebsbedingter Belastung ein.

Bevorzugt ist vorgesehen, daß die Form der korbbogenartig gewölbten Lauffläche durch die Parameterkombinationen R/b ≈ 2,4 bis 3,1 und r/b ≈ 0,05 bis 0,11 ausgeführt ist, wobei mit dem Parameter R der Kugelradius des Korbbogenbodens, mit r der Übergangsradius vom Korbbogen zu den Auslaufbereichen des Korbbogenbodens bezeichnet ist und mit b der Gesamtdurchmesser des Korbbogenbodens bezeichnet ist.

Desweiteren ist bevorzugt vorgesehen, daß auch andere Parameterkombinationen der entsprechenden Radien bzw. Durchmesser zulässig sind, soweit sie sich in Abhängigkeit vom konkreten Anwendungsfall als festigkeits- und/oder verschleißoptimal erweisen.

Besonders bevorzugt ist vorgesehen, daß die Laufflächenkontur nur in den Randbereichen des Laufflächenquerschnittes einer nichtlinearen Funktion, vorzugsweise einer korbbogenartig konvex gewölbten Kurve bezogen auf die gesamte Lauffläche derart entspricht, daß die Radien r und R gemäß einem der Ansprüche 1 bis 3 ausgebildet sind und anschließend in eine lineare oder nahezu lineare Funktion (zum Beispiel eine Gerade) übergehen.

Hierbei entspricht die Laufflächenkontur nur in den Randbereichen des Laufflächenquerschnittes einer nichtlinearen Funktion, vorzugsweise einer korbbogenartig konvex gewölbten Kurve bezogen auf die gesamte Lauffläche derart, daß die Radien r und R gemäß den Ansprüchen 1 bis 3 ausgebildet sind und anschließend in eine lineare oder nahezu lineare Funktion (zum Beispiel Gerade) übergehen. Besonders sollte der Radius r auch bei einem Parameterverhältnis von R/b kleiner als 2,4 aus dem im Anspruch 2 dargestellten Verhältnis r/b abgeleitet werden können und vorzugsweise sogar größer als 0,075 b betragen bzw. anderen optimalen Werten nach Anspruch 3 entsprechen. Der Streckenanteil des nichtlinearen bzw. korbbogenartig gebogenen Abschnittes der Laufflächenkontur zum linearen bzw. nahezu linearen Kurvenabschnitt (zum Beispiel Gerade) der Laufflächenkontur bezogen auf die Gesamtbreite b ist so zu realisieren, daß sich im Beanspruchungszustand die optimale Laufflächenkontur nach den Ansprüchen 1 bis 3 schnellstmöglich von selbst bildet. Ziel ist es hierbei, daß der Radius r und auch der Radius R ausgebildet werden und dann erst eine gerade Lauffläche (zum Beispiel aus fertigungstechnischen Gründen notwendig) realisiert wird.

Bevorzugt ist ferner vorgesehen, daß das Paramterverhältnis R/b kleiner ist als 2,4, die Laufflächenkontur jedoch keiner linearen Funktion, insbesondere keiner geraden, nahezu geraden oder geradeähnlichen Kurve entspricht, und in diesem Fall der Radius r gemäß Anspruch 2 ausgebildet ist, vorzugsweise jedoch größer ist als 0.075 b und/oder so realisiert ist, daß sich im Beanspruchungszustand die optimale Laufflächenkontur schnellstmöglich von selbst einstellt.

Desweiteren ist bevorzugt vorgesehen, daß die Laufflächenkontur nur in den Randbereichen des Laufflächenquerschnittes einer nichtlinearen Funktion, insbesondere einer korbbogenartig konvex gewölbten Kurve bezogen auf die gesamte Lauffläche derart entspricht, daß die Radien r und R gemäß den Ansprüchen 1 bis 5 ausgebildet sind und anschließend in eine lineare oder nahezu lineare Funktion, zum Beispiel eine Gerade, übergehen, wobei insbesondere der Radius r auch bei einem Parameterverhältnis von R/b kleiner als 2,4 aus dem in Anspruch 2 dargestellten Verhältnis r/b abgeleitet werden kann und vorzugsweise sogar größer als 0,075 betragen kann oder anderen optimalen Werten gemäß Anspruch 3 entspricht, wobei zudem der Streckenanteil des nichtlinearen bzw. korbbogenartig gebogenen Abschnittes der Laufflächenkontur zum linearen bzw. nahezu linearen Kurvenabschnitt der Laufflächenkontur bezogen auf die Gesamtbreite b so realisiert ist, daß sich im Beanspruchungszustand die optimale Laufflächenkontur nach den Ansprüchen 1 bis 5 schnellstmöglich von selbst einstellt.

Auch ist bevorzugt vorgesehen, daß das Parameterverhältnis R/b kleiner ist als 2,4, die Laufflächenkontur jedoch keiner linearen Funktion, insbesondere einer geraden, nahezu geraden oder einer geradenähnlichen Kurve entspricht, und in diesem Fall der Radius r gemäß Anspruch 2 ausgebildet ist, vorzugsweise jedoch größer ist als 0,075 b und/oder so realisiert wird, daß sich im Beanspruchungszustand die optimale Laufflächenkontur schnellstmöglich von selbst einstellt.

Bevorzugt ist ferner vorgesehen, daß die zulässigen Härtewerte der Laufflächen zwischen 30 und 60 HRc, vorzugsweise jedoch mit Härtewerten zwischen 40 und 50 HRc betragen, wobei die Grundhärte des Kettengliedes so eingestellt ist, daß unter Einwirkung der durch die Laufrollen wirkenden Druckkraft keine größeren Querschnitts- und Oberflächenbereiche erfassendes Fließen auftritt, insbesondere mit einem zulässigen Streckgrenzenverhältnis von Rₑ/Rₘ gegen 1, vorzugsweise aber einem Streckgrenzenverhältnis von Rₑ/Rₘ um 0,65 unter besonderer Beachtung der Gewährleistung eines hinreichend plastischen Arbeitsvermögens.

Dabei bedeutet Rₑ die Streckgrenze und Rₘ die Zugfestigkeit.

Auch ist bevorzugt vorgesehen, daß das Kettenglied aus üblichen Materialien, nämlich Vergütungsstahl bzw. Sphäroguß oder Stahlguß, vorzugsweise jedoch mit Analysewerten besteht, die die Mangansulfidbildung minimieren, wobei insbesondere beim Einsatz von Manganstählen ein niedriger Schwefelgehalt vorzugsweise von unter 0,02 % eingehalten ist.

Hierdurch wird der Materialermüdung entgegengewirkt.

Besonders bevorzugt ist vorgesehen, daß das Kettenglied aus Alternativmaterialien, vorzugsweise auf Hartmetallbasis, Faserverbundwerkstoffen, Keramik-Keramik-Verbundwerkstoffen und/oder Ingenieurkeramiken, vorzugsweise auf Basis von Si₃N₄ (Siliziumnitrit) mit weniger als 15 Gewichtsprozent Sinteradditiv, einem Bruchwachstum im unterkritischen Bereich bei einer Bruchzähigkeit KIC kleiner als 20 MPA √m sowie ähnlichen Materialien, wobei die Festigkeit und die Zähigkeit durch Einsatz und Dosierung geeigneter Additive auf einen für den konkreten Anwendungsfall für den Einsatz des Kettengliedes optimalen Wert einzustellen ist, wobei besonders auf Homogenität (Weibull-Modul m) des Gliedwerkstoffes zu achten ist und m größer 10 eingehalten ist.

Durch die erfindungsgemäße Formgestaltung ist der Einsatz von Alternativmaterialien möglich, da diese Materalien infolge der erfindungsgemäßen Formgebung bei der bestimmungsgemäßen Belastung nur in der Weise mit Druckkräften belastet sind, daß ein Abplatzen oder eine Zerstörung des Werkstoffes nicht zu erwarten ist.

Ferner ist bevorzugt vorgesehen, daß bei gekröpften Gliedausbildungen die in den Ansprüchen 1 bis 7 dargestellten Laufflächenkonturen und Radien- bzw. Parameterverhältnisse im mittleren Laufflächenbereich und in den Bereichen des Bolzen- bzw. Buchsenauges eingehalten sind.

Auch ist bevorzugt vorgesehen, daß bei der gekröpften Kettengliedausführungsform die nach den Ansprüchen 1 bis 7 dargestellten Laufflächenformen im mittleren Laufflächenbereich realisiert sind und die Laufflächenkontur in den Bereichen des Bolzen- bzw. Buchsenauges, d.h. im Scharnierbereich zwischen zwei Kettensegmenten, so ausgeführt ist, daß sich in diesem Bereich die nach den Ansprüchen 1 bis 7 ergebende Laufflächenkontur jeweils über den Querschnitt beider Kettenglieder darstellt.

Desweiteren ist bevorzugt vorgesehen, daß die Kontur der Seitenflanken (ein- und/oder beidseitig) der Laufflächen des Kettengliedes quer (90°) zur Laufrichtung einer nichtlinearen Funktion, vorzugsweise einer korbbogenartig konvex gekrümmten Kurve entsprechen.

Zudem ist bevorzugt vorgesehen, daß die korbbogenartig konvex gekrümmte Kurve der Seitenflanken der Laufflächen über die gesamte Länge oder auch nur in Teilbereichen des Kettengliedes in ihren Radien R und r vorzugsweise so ausgebildet sind, daß die Parameterkombinationen R/b1 den Werten 2,4 bis 3,1 und r/b1 den Werten ≈ 0,05 bis 0,11 entsprechen oder unter Berücksichtigung unterschiedlicher Kettengliedausführungsformen so optimiert sind, daß sich in Abhängigkeit vom konkreten Anwendungsfall beim praktischen Einsatz eine festigkeits- und/oder verschleißoptimale Kontur schnellstmöglich von selbst einstellt. Der Parameter b1 ist dabei in Abhängigkeit vom Kettengliedtyp und der speziellen Gliedform zu quantifizieren, wobei bei dieser Quantifizierung die durch die Form des Gegenstückes zur Gliedlauffläche (zum Beispiel die Form der Lauffläche des Leitrades oder der Laufrolle) bestimmten bzw. davon abhängigen Flächen der Krafteinwirkung auf die Seitenflanken der Laufflächen des Kettengliedes zu berücksichtigen sind.

Gegenstand der Erfindung ist ferner ein Leitrad, wie es in den Ansprüchen 15 bis 22 gekennzeichnet ist.

Ferner ist Gegenstand der Erfindung eine Lauf- oder Tragrolle, wie sie in Anspruch 23 gekennzeichnet ist.

Leitrad, Trag- und Laufrolle sind gemäß diesen Ansprüchen durch modifizierte Laufflächenformen charakterisiert, die sich aus der speziellen Laufflächenkontur des Gegenstückes der Laufflächenpaarung (z.B. des Kettengliedes) ableiten lassen und ebenfalls einer stetigen nichtlinearen (gekrümmten) Funktion bzw. nichtlinear-linearen Kurvenkombinationen entsprechen. Für die optimale technische-physikalische Funktionsweise der Laufflächenpaarung Kettenglied/Leitrad bzw. Kettenglied/Trag- oder Laufrolle erweist sich unter Berücksichtigung der speziellen Laufflächenkontur des Gegenstückes, z.B. des Kettengliedes, für bestimmte technische Einsatzfälle von Laufwerken, Fördereinrichtungen und Kettensystemen ähnlicher Ausführungsformen und Funktionen (z.B. schnellaufende Systeme, Systeme mit spezieller stoßdynamischer Belastung u.ä.) als besondere Auführungsformen der Laufflächenkontur des Leitrades sowie der Trag- oder Laufrolle eine lineare oder nahezu lineare Kurvenform (z.B. Gerade) die, gemäß Anspruch 17, in einem Winkel zu einer angenommenen waagerechten Lauffläche angeordnet ist als zweckmäßig, wobei die Größe des Winkels vorzugsweise so zu wählen ist, daß sich unter den Bedingungen der speziellen Laufflächenkontur des Gegenstückes (z.B. Kettenglied) eine festigkeits- und verschleißoptimale Kontur der Laufflächen und Seitenführungsflächen des Leitrades bzw. der Trag- oder Laufrolle im Praxiseinsatz schnellstmöglich von selbst einstellt, besonders bevorzugt aber ein Neigungsverhältnis von 1:10 realisiert ist, wobei hervorgehoben werden muß, daß diese Neigungen der Laufwerksflächen von Leiträdern, Trag- oder Laufrollen aus funktionellen Gründen, in Abhängigkeit von der Geometrie der gesamten Laufflächenpaarung, eingestellt werden und nicht identisch sind mit einer rein zufällig durch bestimmte Fertigungsverfahren (z.B. Gießen) bedingten Aushebeschräge an den entsprechenden Laufflächen des Leitrades bzw. der Trag- oder Laufrolle.

Für ebenfalls besondere technische Ausführungsformen von Kettensystemen kann es sich aus festigkeits- und/oder verschleißoptimalen Gründen auch als sinnvoll erweisen, daß der zu einer gedachten Geraden der Lauffläche, geneigte lineare Bereich der Laufflächen des Leitrades bzw. der Trag- oder Laufrolle in einer speziellen Kombination unterschiedlich geneigter Kurven (z.B. mehrere Geraden in unterschiedlichen Winkeln zur gedachten geraden Lauffläche) ausgeführt ist, vorzugsweise so, daß sich eine festigkeits- und verschleißoptimale Kurvenform der Laufflächen des Leitrades bzw. der Trag- oder Laufrolle, unter Berücksichtigung der Laufflächenkontur des Gegenstückes der Laufflächenpaarung (z.B. Kettenglied) im Praxiseinsatz schnellstmöglich von selbst einstellt, besonders bevorzugt aber der bei einer Kurvenkombination von zwei linearen Streckenabschnitten, bezogen auf den Laufflächenquerschnitt quer (90°) zur Laufrichtung (bei Gefälle der Laufflächenkontur nach außen), zum Spurkranz hin gerichtete lineare oder nahezu lineare Streckenabschnitt der Laufflächenkontur ein Neigungsverhältnis von 1:20 aufweist und bei dem zum Leitrad bzw. Trag- oder Laufrollenrand hin gerichteten linearen oder nahezu linearen Streckenabschnitt der Laufflächenkontur ein Neigungsverhältnis von 1:10 realisiert ist und im umgekehrten Fall des Gefälles (nach innen) sich diese Neigungsverhältnisse in umgekehrter Weise darstellen.

Die erfindungsgemäße Ausbildung von Kettenglied, Leitrad und Tragrolle kann jeweils allein für sich verwirklicht werden und vorteilhaft sein, ist aber auch in Kombination mit der entsprechenden Ausbildung der Laufflächen des Kettengliedes, des Leitrades, der Laufrolle und der Tragrolle möglich.

Sofern komplette Kettensegmente, bestehend aus zwei zueinander parallelen Kettengliedern zusammengefügt sind und eine entsprechende Kette aus solchen Kettensegmenten aufgebaut ist, tritt im Betrieb beispielsweise bei den Laufwerken von Raupenfahrzeugen häufig der Effekt auf, daß das gesamte Kettensegment jeweils auf der Laufrolle oder auf dem Leitrad eine Kippstellung einnimmt, so daß nur der Außenbereich eines der beiden Kettenglieder, die ein Kettensegment bilden, unmittelbar in Eingriff mit der entsprechenden Anlagefläche des Leitrades oder der Laufrolle ist. Sofern dies berücksichtigt ist, ist die erfindungsgemäße Aufgabe auch dadurch zu lösen, daß die Laufflächenkontur des Gliedes im Querschnitt des Laufflächenkopfes quer (90°) zur Laufrichtung nur an den bezüglich eines Kettensegmentes mit zwei zueinander parallelen Kettengliedern außenliegenden Laufflächenbereichen einer nichtlinearen Funktion entspricht, vorzugsweise einer korbbogenförmig oder logarithmisch konvex gekrümmten Kurve, als festigkeits- und/oder verschleißoptimierten Laufflächengeometrie, vorzugsweise über die halbe Breite oder bis zu zwei Dritteln der Breite der Lauffläche jedes Kettengliedes, wobei die Form dieses Teils der Laufflächenkontur besonders bevorzugt in der Weise ausgeführt ist, wie sie sich auf der Grundlage des mechanischen Prinzips des kleinsten Zwang es bei einer normalen betriebsbedingten Bewegung und Belastung zwischen einem Kettenglied, unter Berücksichtigung des gesamten Kettensegmentes, im Zusammenwirken beispielsweise mit einer Laufrolle, bei hinreichend langer Bewegungsdauer selbständig einstellen kann.

Dabei ist bevorzugt vorgesehen, daß die Laufflächenkontur in dem Bereich der Lauffläche, in welchem die nichtlineare Funktion nicht realisiert ist, in eine andere Kurvenform, vorzugsweise eine lineare oder angenähert lineare, besonders bevorzugt einer in Parallelität oder angenäherter Parallelität zur Gegenlauffläche (z.B. bezogen auf herkömmliche Ausführungsformen der Lauffläche einer Rolle) geraden oder geradenähnlichen Kurve übergeht.

Desweiterenn kann bevorzugt vorgesehen sein, daß der Rand der Lauffläche in dem Bereich der Laufflächenkontur, in welcher die nichtlineare Funktion nicht realisiert ist, durch den Übergangsradius r, vorzugsweise in der Parameterkombination r/b ≈ 0,05 bis 0,11 ausgeführt wird.

In analoger Weise kann auch die Ausbildung des Leitrades erfolgen, so daß erfindungsgemäß vorgeschlagen wird, daß die Kontur der Lauffläche oder der Laufflächen des Leitrades quer (90°) zur Laufrichtung im Querschnitt einer nichtlinearen Funktion, vorzugsweise einer korbbogenartig oder logarithmisch konkav gekrümmten Kurve, unter der Wirkung einer adäquat gekrümmten Gegenlauffläche (z.B. des Kettengliedes) als festigkeits- und/oder verschleißoptimalen Rollenflächengeometrie, bezogen auf einen Teil, z.B. die halbe bzw. zwei Drittel der Laufflache, vorzugsweise dem Spiegelbild der Gegenlauffläche (z.B. der des Kettengliedes) bzw. einer spiegelbildähnlichen oder dieser angenäherten Kontur (z.B. unter Berücksichtigung der Laufflächenbreite des Leitrades) entspricht und wie sie sich auf der Grundlage des mechanischen Prinzips des kleinsten Zwanges bei einer normalen Bewegung zwischen einer Lauffläche, z.B. der eines Leitrades und einem entsprechenden Gegenstück, z.B. einem Kettenglied bei hinreichend langer Bewegungsdauer selbständig einstellt.

Auch bei der Tragrolle kann eine entsprechende Ausbildung vorgesehen sein, die sich dadurch auszeichnet, daß diese analog der Ausbildung nach einem der Ansprüche 24 bis 27 ausgebildet ist.

Da sich aufgrund der möglichen Kippstellung des Kettensegmentes relativ zur Laufrolle bzw. zum Leitrad in der Praxis möglicherweise die Einstellung der Lauffläche entsprechend einer nicht linearen Funktion bzw. einer Korbbogenform zuerst und möglicherweise vornehmlich auf den Kettengliedaußenseiten erfolgt, ist bevorzugt vorgesehen, daß für die konstruktive Ausführung und den Lieferzustand dieser Kettenglieder die entsprechende Kontur nicht über die gesamte Lauffläche quer zur Laufrichtung vorgesehen ist, sondern nur die jeweiligen Kettengliedaußenseiten (bezogen auf das Kettensegment) im Neuzustand mit der nicht linearen, speziell korbbogenförmig gewölbten Flächenkontur versehen wird. Hieraus resultieren Einsparungen im Fertigungsaufwand, ohne daß dadurch die gewünschten Wirkungen wesentlich beeinträchtigt wären. Bei der Ausbildung der Laufflächenkontur des Kettengliedes nur im äußeren Bereich des Querschnittes des Laufflächenkopfes sind vorzugsweise die Bedingungen und Merkmale einzuhalten, die in den Ansprüchen 1 bis 14 bezeichnet sind.

Entsprechend der Ausbildung und Wirkungsweise eines Kettensegmentes, welches aus zwei Kettengliedern gebildet ist, die durch Buchse und Bolzen verbunden sind, kann auch die entsprechende Ausbildung des Leitrades so vorgenommen werden, wie dies in Anspruch 27 bezeichnet ist, wobei auch dabei die vorteilhaften Merkmale gemäß Anspruch 15 bis 22 verwirklicht sein können.

Auch bei der Ausbildung der Tragrolle kann eine analoge Ausbildung der Lauffläche vorgesehen sein.
In der Zeichnung ist eine Ausbildung gemäß Stand der Technik verdeutlicht. In Figur 1 ist ein herkömmliches Kettenglied in Ansicht gezeigt. In Figur 1a bis c ist das Kettenglied in Richtung der Schnittlinien AA bzw. BB bzw. in Ansicht des Pfeiles C gezeigt.
In Figur 2 bis Figur 2f ist ein im Stand der Technik bekanntes Kettenglied in ungekröpfter Ausbildung gezeigt. In Figur 3 sind erfindungsgemäß ausgebildete Kettenglieder der Ausführungsformen gemäß Figur 1 und 2 im Schnitt entsprechend den Positionen Schnittlinie A und Schnittlinie B gezeigt.
In Figur 4 ist eine Einzelheit in der Ansicht gemäß Figur 3 gezeigt.
In Figur 5 ist eine weitere Ausbildung in gleicher Darstellung gezeigt.
In Figur 6 ist eine weitere Ausbildung in gleicher Ansicht gezeigt;
in Figur 7 ist ein Scharnierbereich von zwei Kettengliedern mit Kettenbuchse und Kettenbolzen gezeigt;
in Figur 8 ist eine weitere Variante gezeigt;
Figur 9 zeigt ein Leitrad (teilweise) in Ansicht;
Figur 10 eine Variante hierzu;
Figur 11 bis 15 weitere Varianten in gleicher Ansicht;
Figur 16 eine erfindungsgemäß augebildete Trag- und Laufrolle in Ansicht (teilweise dargestellt);
Fig. 17 bis 20 weitere Ausführungsformen in gleicher Ansicht;
Figur 21 eine schematische Darstellung eines Betriebszustandes eines Kettensegmentes relativ zur Laufrolle;
Figur 22a und b die Ausschnittsdarstellung der Lauffläche eines Kettengliedes gemäß einer weiteren Ausbildungsform der Erfindung;
Figur 23 ein Leitrad ausschnittsweise in einer besonderen Weiterbildung der Erfindung;
Figur 24 desgleichen anhand der Darstellung einer Tragrolle.

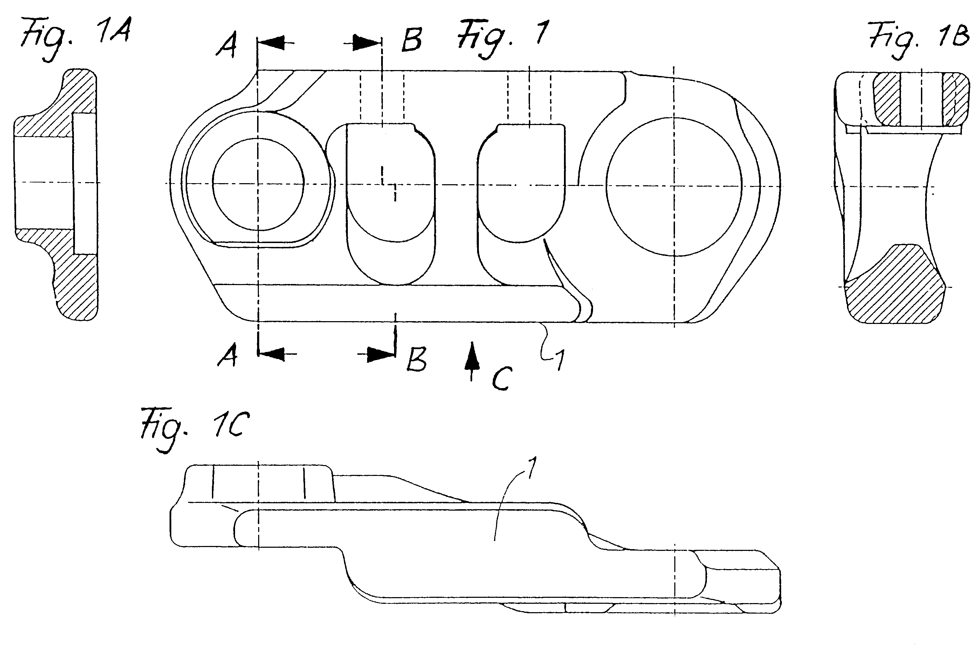

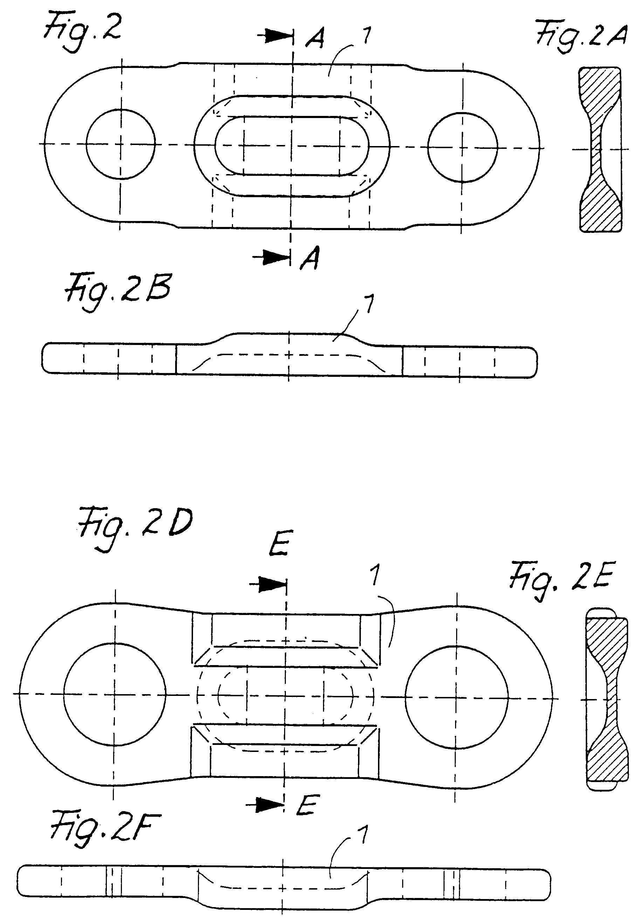

In Figur 1 und 2 ist der Stand der Technik gezeigt. Bei diesen bisherigen Ausführungsformen von Kettengliedern ist der Laufflächenbereich 1 als lineare oder nahezu lineare Kontur ausgebildet, d.h. die Lauffläche ist im Prinzip eben ausgebildet. Diese Ausbildung ist im Hinblick auf den Verschleiß und vor allem auf ein optimales Festigkeitsverhalten ungünstig.

In der Figur 1 ist dabei ein gekröpftes Kettenglied gezeigt, während in Figur 2 ein ungekröpftes Kettenglied dargestellt ist.

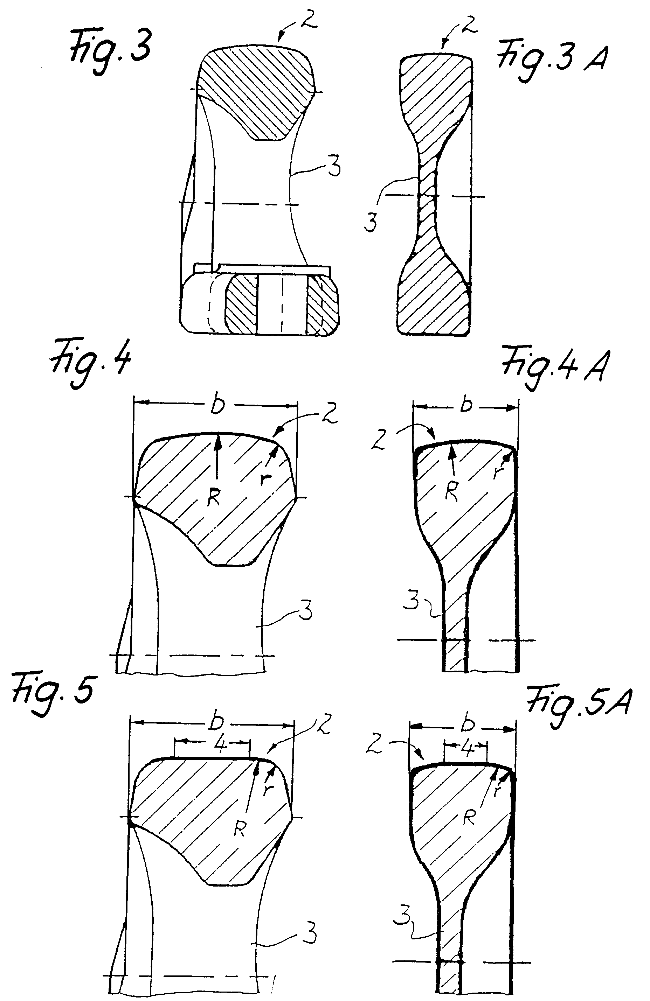

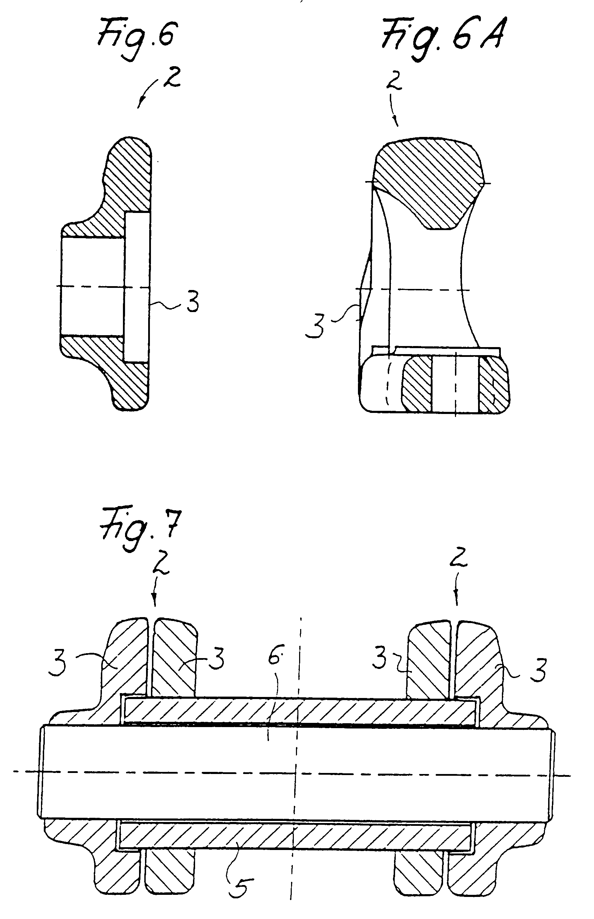

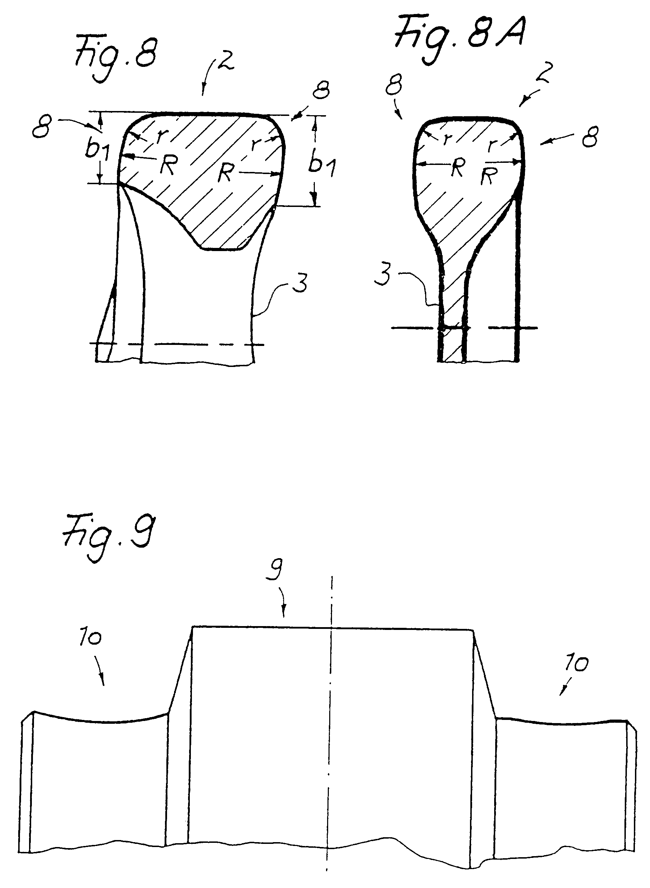

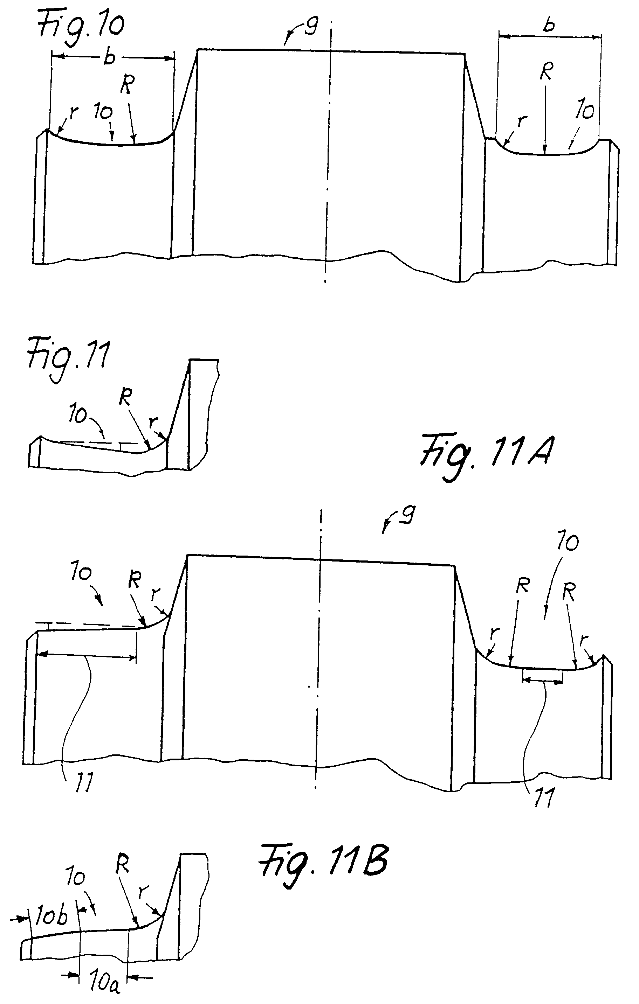

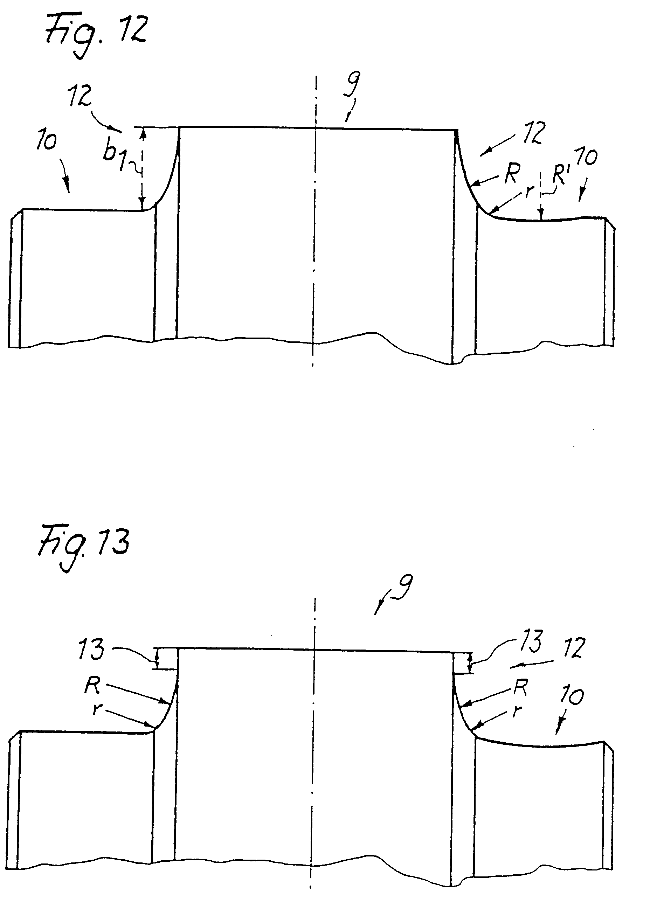

Bei der Ausbildung gemäß Figur 3 ist die Laufflächenkontur 2 des Kettengliedes 3 im Querschnitt des Laufflächenkopfes (quer zur Laufrichtung) in Form einer nichtlinearen Funktion ausgebildet, insbesondere in Form einer korbbogenartig konvex gewölbten Fläche, die einer festigkeitsoptimalen Rollflächengeometrie entspricht bzw. angenähert ist.

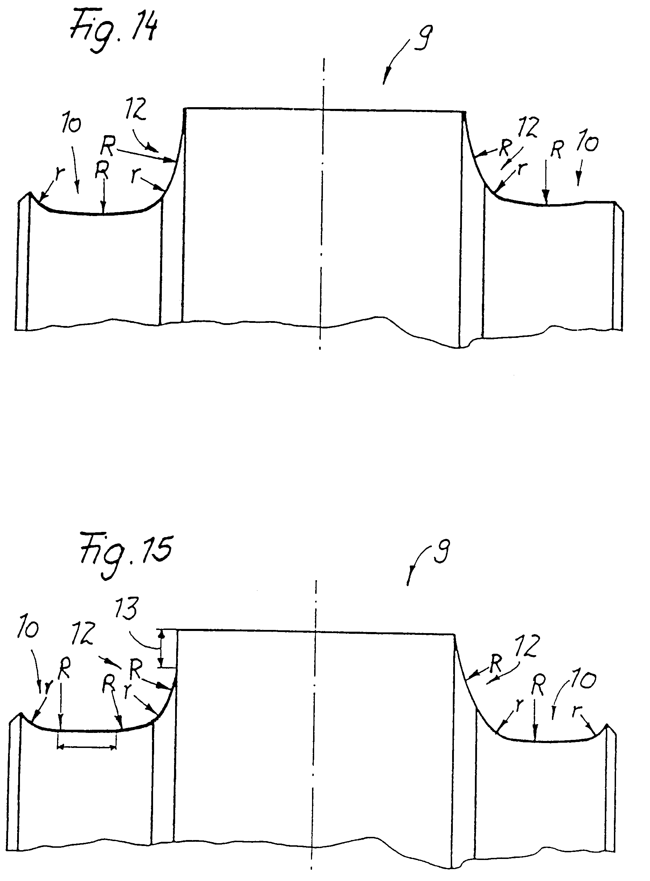

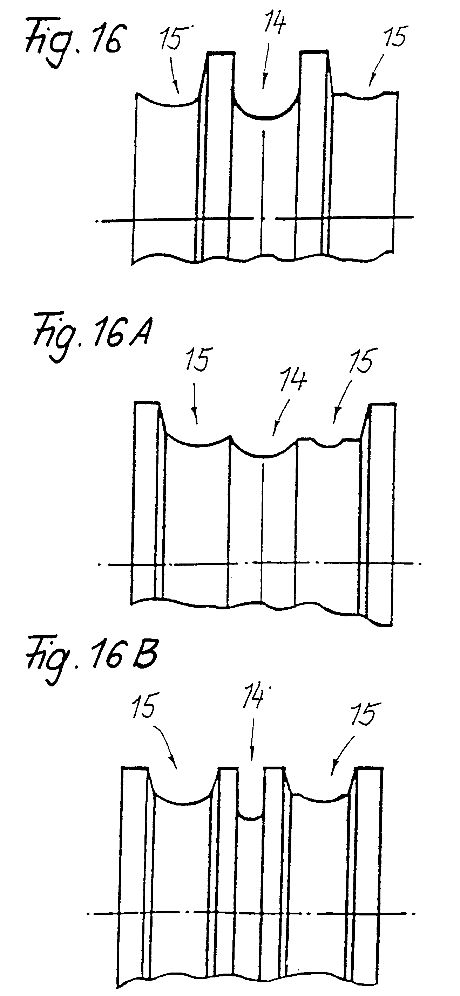

In Figur 4 ist die Form der korbbogenartig gewölbten Lauffläche 2 durch die Parameterkombinationen R/b ungefähr 2,4 bis 3,1 und r/b ≈ 0,05 bis 0,11 ausgeführt. Bei der Ausführungsform gemäß Figur 5 sind die gleichen Radien und Parameterverhältnisse im mittleren Laufflächenbereich und in den Bereichen des Bolzen- bzw. Buchsenauges realisiert, wobei die Laufflächenkontur nur in den seitlichen Randbereichen des Laufflächenquerschnittes einer nicht linearen Funktion entsprechenden Form entspricht, die anschließend in eine lineare oder nahezu lineare Funktion (Gerade 4) übergeht.

Bei der Ausführungsform gemäß Figur 6 ist bei einem gekröpften Kettenglied die entsprechende Ausbildung der Lauffläche 2 sowohl im mittleren Laufflächenbereich (Figur 6 rechte Ausführung) als auch im Bereich des Bolzenauges (linke Darstellung in Figur 6) gezeigt.

Bei der Ausführungsform gemäß Figur 7 ist bei einem gekröpften Kettenglied ein Scharnierbereich gezeigt, wobei die Kettenglieder 3 mit einer Kettenbuchse 5 und einem Kettenbolzen 6 komplettiert sind. Dabei ist die gewünschte Laufflächenform der Lauffläche 2 in den Bereichen des Bolzen- bzw. Buchsenauges, also im Scharnierbereich zwischen zwei Kettensegmenten so ausgeführt, daß sich in diesem Bereich die gewünschte Laufflächenkontur jeweils über den gesamten Querschnitt beider Kettenglieder ergibt.

Bei der Ausführungsform gemäß Figur 8 entspricht die Kontur der Seitenflanken 8 beidseitig der Laufflächen 2 des Kettengliedes 3 ebenfalls einer korbbogenartig konvex gekrümmten Kurve in den angegebenen Größenordnungsbereichen und Relationen der Radien R und r.

In den Figuren 9 bis 15 ist ein Leitrad 9 zur Führung und/oder Umlenkung bzw. zum Spannen von Gleisketten, Transportketten oder ähnlichen Kettenausführungsformen gezeigt. Dabei entspricht die Kontur der Laufflächen 10 des Leitrades quer zur Laufrichtung im Querschnitt einer nichtlinearen Funktion, insbesondere einer korbbogenartig konkav gekrümmte Kurve, die einer festigkeits- und/oder verschleißoptimalen Rollflächengeometrie entspricht bzw. angenähert ist.

Wie insbesondere aus Figur 10 ersichtlich sind die Radien R und r der korbbogenartigen konkaven Krümmung der Laufflächen 10 durch die Parameterkombinationen R/b ≈ 2,4 bis 3,1 und r/b ≈ 0,05 bis 0,11 charakterisiert. Der Paramter b ist dabei in Abhängigkeit von der Form des Gegenstückes, d.h. zum Beispiel des auf der Lauffläche des Leitrades 9 laufenden Kettengliedes und der damit verbundenen Krafteinwirkung auf die Lauffläche des Leitrades 9 auszuführen.

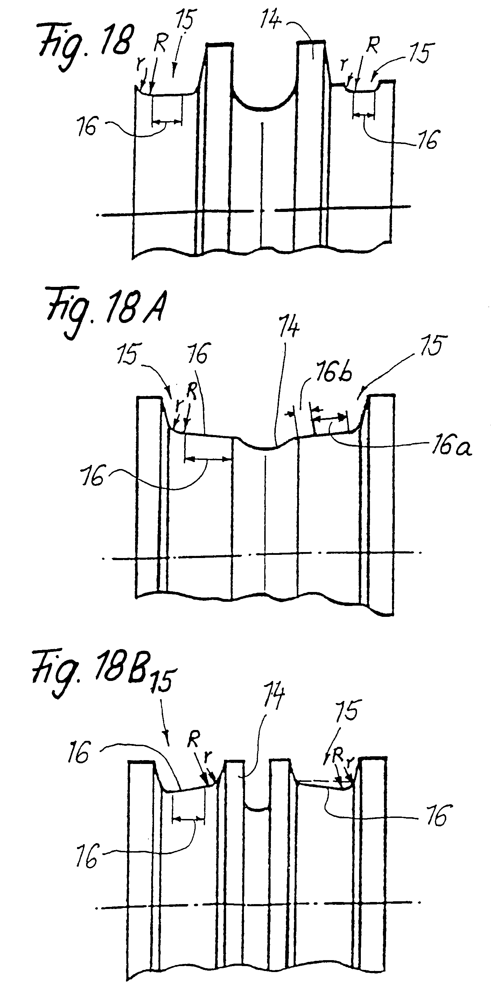

Wie aus Figur 11 ersichtlich, kann die nichtlineare Kurvenform der Kontur der Laufflächen 10, vorzugsweise die korbbogenartig konkav gekrümmte Kontur, nur teilweise realisiert sein, d.h. die Kantenradien, zum Beispiel der Kantenradius r sowie die Laufflächenradien, zum Beispiel der Laufflächenradius R sind so ausgeführt, daß sie in eine lineare oder nahezu lineare Funktion der Laufflächenkontur, zum Beispiel einer Geraden 11 übergehen. Die lineare oder nahezu lineare Kurvenform der Lauffläche 10 (16) kann auch in einem Winkel zu einer angenommenen waagerechten Lauffläche angeordnet sein, wie aus Figur 11, linke Darstellung (Figur 18 Mitte und unten), ersichtlich, wobei der Winkel vorzugsweise so zu wählen ist, daß sich die festigkeits- und verschleißoptimale Laufflächenkontur im Praxiseinsatz, unter Berücksichtigung der speziellen Laufflächenform des Gegenstückes der Laufflächenpaarung (z.B. Kettenglied) schnellstmöglich von selbst einstellt, besonders bevorzugt aber mit einem Neigungsverhältnis von 1:10 ausgeführt ist.

Die gedachte Gerade der Lauffläche ist dabei gestrichelt gezeigt und die ihr gegenüberliegende geneigte Fläche in durchgezogenen Linien dargestellt.

Wie ebenfalls in Figur 11, untere linke Darstellung (Figur 18 Mitte und unten), gezeigt, kann die lineare oder nahezu lineare Kurvenform auch in einer Kurvenkombination mit unterschiedlichen Neigungen realisiert sein, bei zwei kombiniert linearen oder nahezu linearen Streckenabschnitten der Laufflächenkontur vorzugsweise mit den Neigungsverhältnissen im Streckenabschnitt 10a (16a) von 1:20 und dem Streckenabschnitt 10b (16b) von 1:10. Analog gilt dies auch für die Laufrolle und Tragrolle. Gemäß Figur 12 kann die Kontur der Seitenführungflächen 12 des Mittelbundes des Leitrades 9 einer korbbogenartig konkav gewölbten Kurve entsprechen, wobei die Radien R und r der korbbogenartig gewölbten Kurve vorzugsweise durch die Verhältnisse R zu b1 ungefähr gleich 2,4 bis 3,1 und r/b1 ungefähr gleich 0,05 bis 0,11 ausgeführt sind.

Es kann auch, wie dies in Figur 13 gezeigt ist, die korbbogenartig konkav gekrümmte Kontur der Seitenführungsflächen 12 des Mittelbundes des Leitrades 9 nur teilweise realisiert sein, wobei der Kantenradius r und der Laufflächenradius R so ausgeführt sind, daß sie in eine lineare oder nahezu lineare Funktion der Kontur der Seitenführungsflächen 12 des Mittelbundes des Leitrades 9 übergehen. Die linearen Bereiche sind mit 13 bezeichnet.

Wie aus Figur 14 und 15 ersichtlich, können die nicht linearen, vorzugsweise korbbogenartig konkav gekrümmten Konturen der Laufflächen 10 des Leitrades 9 sowie die ebenfalls entsprechend gekrümmte Kontur der Seitenführungsflächen 12 des Mittelbundes des Leitrades 9 so miteinander kombiniert werden, daß beide Kurven Formen sowohl auf nichtlinearer Basis (vergleiche Figur 14) als auch kombiniert mit linearer und nichtlinearer Basis (vergleiche Figur 15) so ineinander übergehen, daß eine festigkeits- und/oder verschleißoptimale Gesamtkontur entsteht und die Radien R und r der korbbogenartig konkav gekrümmten Gesamtkontur durch die oben beschriebenen Maßverhältnisse charakterisiert sind.

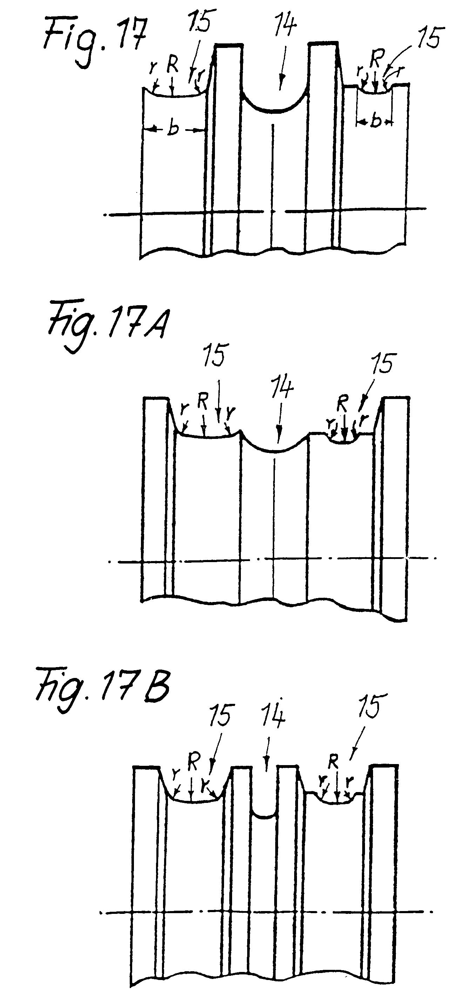

In den Figuren 16 bis 20 schließlich ist jeweils eine Tragrolle 14 zur Abstützung und Führung von Gleisketten, Transportketten oder ähnlichen Kettentypen oder als Laufrolle zur Gewährleistung der Rollfunktion und Übernahme der Krafteinwirkung in bezug auf durch Gleisketten, Transportketten und/oder kettenähnlicher Ausführungsformen und Funktionen notwendig werdender Ablaufmechanismen gezeigt. Auch dabei entspricht die Kontur der Laufflächen 15 der Trag- oder Laufrolle 14 quer zur Laufrichtung gesehen im Querschnitt einer nichtlinearen Funktion, vorzugsweise einer korbbogenartig konkav gewölbten Kurve (wie insbesondere aus Figur 16 ersichtlich). Ausweislich der Figur 17 sind die Radien R und r der korbbogenartig konkaven Krümmung der Lauffläche 15 vorzugsweise durch die Parameterverhältnisse R/b ≈ 2,4 bis 3,1 und r/b ≈ 0,05 bis 0,11 charakterisiert.

Der Parameter b ist dabei in Abhängigkeit von der Form des Gegenstückes, d.h. zum Beispiels des auf der Lauffläche der Trag- bzw. Laufrolle 14 laufenden Kettengliedes und der damit verbundenen Krafteinwirkung auf die Lauffläche zu quantifizieren.

Wie insbesondere aus Figur 18 ersichtlich ist die nichtlineare Kurvenform der Kontur der Laufflächen 15 nur teilweise realisiert, d.h. die Kantenradien, zum Beispiel der Kantenradius r sowie die Laufflächenradien, zum Beispiel der Laufflächenradius R sind so ausgeführt, daß sie in eine lineare oder nahezu lineare Funktion der Laufflächenkontur, zum Beispiel einer Geraden 16 übergehen.

Hierbei gelten die gleichen Ausführungen wie oben bezüglich der Lauffläche des Leitrades erläutert ist, bezogen auf Figur 18 und Laufflächenkontur 16a und 16b.

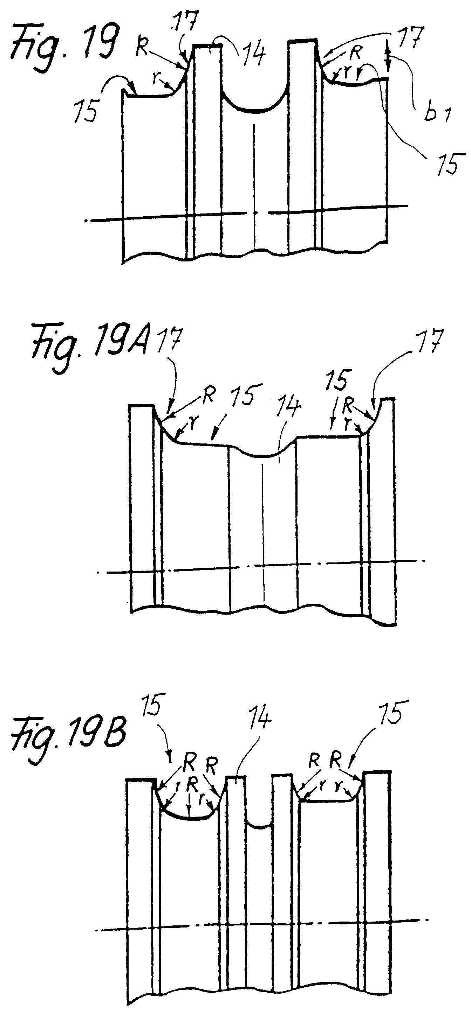

Bei der Ausführungsform gemäß Figur 19 ist die Kontur der Seitenführungsflächen 17 der Spurkränze der Trag- bzw. Laufrolle 14 im Querschnitt einer nichtlinearen Funktion angepaßt, insbesondere einer korbbogenartig konkav gewölbten Kurve, wobei die Radien R und r der korbbogenartig gewölbten Kurve vorzugsweise durch die Verhältnisse R/b1 ≈ 2,4 bis 3,1 und r/b1 ≈ 0,05 bis 0,11 ausgebildet sind.

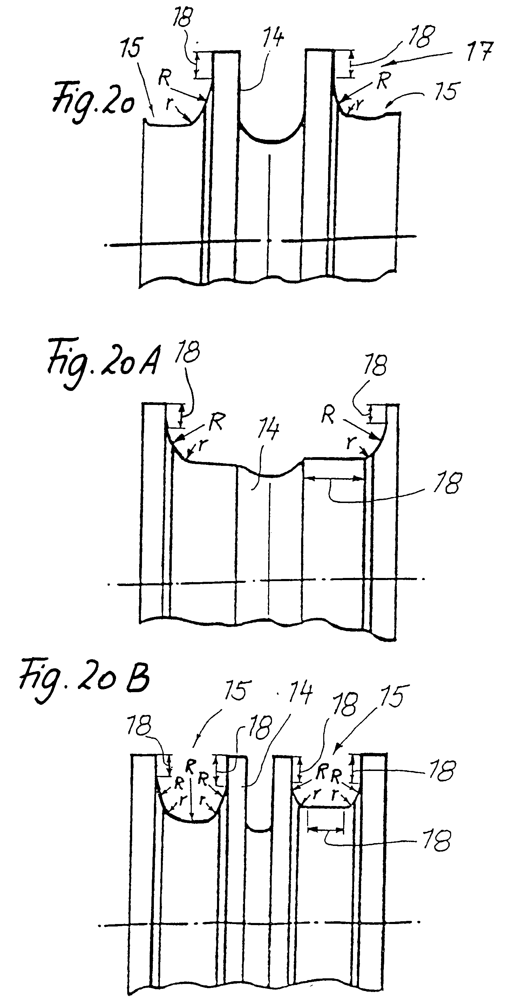

In Figur 20 ist gezeigt, daß die nichtlineare vorzugsweise korbbogenartig gekrümmte Kontur der Seitenführungsflächen 17 der Spurkränze der Trag- oder Laufrolle 14 nur teilweise ausgebildet sind, d.h. die Kantenradien zum Beispiel der Kantenradius r sowie die Laufflächenradien, zum Beispiel der Laufflächenradius R sind so ausgeführt, daß sie in eine lineare oder nahezu lineare Funktion 18 der Kontur der Seitenführungsflächen der Spurkränze der Trag- oder Laufrolle 14 übergehen. Dabei können die nichtlinearen, vorzugsweise korbbogenartig gekrümmten Konturen der Laufflächen der Trag- und Laufrolle 14 und die entsprechende Kontur der Seitenführungsflächen 17 so miteinander kombiniert werden, daß beide Kurvenformen sowohl auf rein nichtlinearer Basis als auch kombiniert linear/nichtlinearer Basis ineinander übergehen.

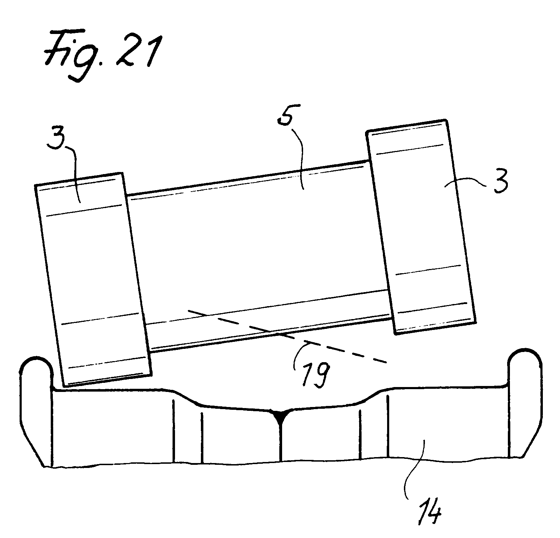

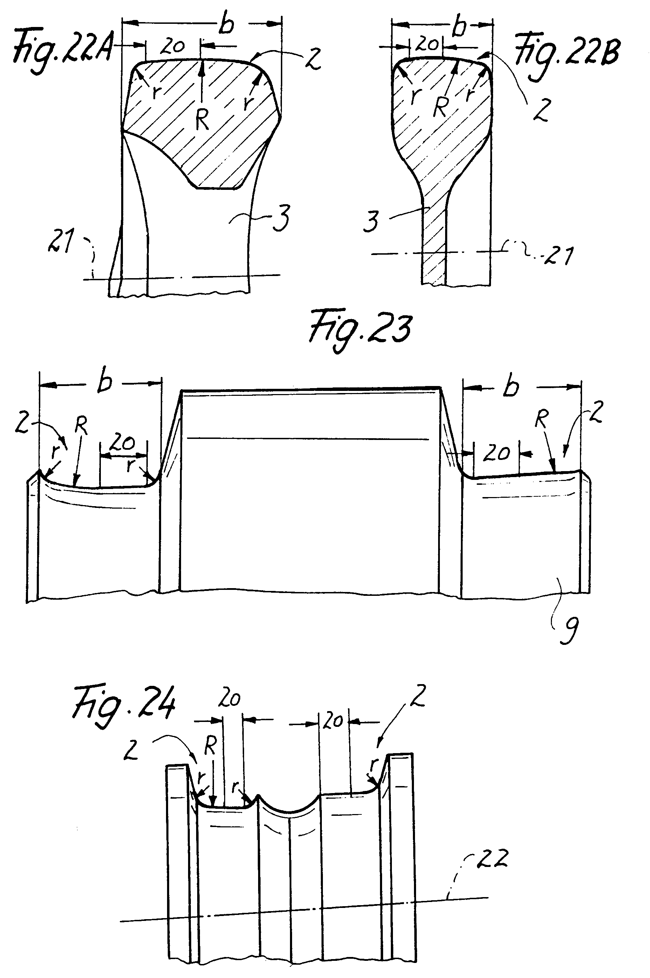

In der Zeichnungsfigur 21 ist die mögliche Kippstellung eines Kettensegmentes relativ zu einer Tragrolle 14 gezeigt. Das Kettengliedsegment besteht dabei aus zwei Kettengliedern 3, die durch eine Kettenbuchse 5 bzw. ein Kettenbolzen miteinander verbunden sind. Gemäß der zeichnerischen Darstellung nach Figur 21 ist es möglich, daß das Kettensegment eine Kippstellung relativ zur Tragrolle oder auch relativ zum Leitrad einnimmt. In der Zeichnungsfigur 21 ist die eine mögliche Kippstellung in durchgezogenen Linien gezeigt, während die andere mögliche Kippstellung durch eine gestrichelte Linie 19 angegeben ist. Sofern sich beim Betrieb einer Konstruktion mit umlaufender Kette, Leitrad und Laufrad, wie dies bei Raupenfahrwerken beispielsweise üblich ist, eine Kippstellung gemäß Figur 21 ergibt, so bedeutet dies, daß sich bei der Benutzung eines derartigen Kettensegmentes die Korbbogenform zuerst oder ausschließlich auf den Kettengliedaußenseiten ausbildet. Aufgrund dieser Möglichkeit besteht eine bevorzugte konstruktive Weiterbildung darin, daß das Kettenglied entsprechend der Darstellung in Figur 22a und 22b jeweils nur auf der Kettengliedaußenseite (in Figur 22a und 22b rechts oben) quer zur Laufrichtung mit nichtlinearen, vorzugsweise korbbogenförmig konvex gewölbten Laufflächenkonturen 2 versehen wird. Damit wird im Neuzustand eine festigkeits- und/oder verschleißoptimale Laufflächengeometrie in einem Teilbereich der Laufflächenkontur, nämlich im Bereich 2 erzeugt, wobei sich diese Laufflächenkontur 2 über die halbe Breite oder über zwei Drittel der Breite der Lauffläche des Kettengliedes 3 erstreckt. Der übrige Bereich, der mit dem Pfeil 20 angegeben ist, ist in anderer Weise ausgebildet, vorzugsweise durch eine lineare oder angenähert lineare Fläche, die vorzugsweise parallel oder annähernd parallel zur Gegenlauffläche der Tragrolle oder des Leitrades ausgebildet ist. Vorzugsweise ist dieser Bereich gerade und verläuft etwa parallel zur Schwenkachse des Kettengliedes, die bei 21 angedeutet ist. Auch bei dieser Ausbildung Sind die Verhältnisse des Übergangsradius r relativ zur Breite b der gesamten Lauffläche so ausgeführt, wie es dem Verhältnis r/b etwa 0,05 bis 0,11 entspricht.

Die entsprechende Ausbildung ist auch bei der Ausbildung des Leitrades 9 gemäß Figur 23 vorgesehen.

Dabei entspricht die Kontur der Lauffläche 2 bzw. der Laufflächen 2 des Leitrades 9 quer (90°) zur Laufrichtung im Querschnitt einer nichtlinearen Funktion, vorzugsweise einer korbbogenartig oder logarithmisch konkav gekrümmten Kurve entsprechend der adäquat gekrümmten Gegenlauffläche des Kettengliedes 2 als festigkeits- und/oder verschleißoptimaler Rollflächengeometrie, wobei diese besondere Ausbildung der Lauffläche 2 nur in dem relativ außenliegenden Bereich der Lauffläche 2 des Leitrades 9 ausgebildet ist und zwar über die halbe Breite der Lauffläche oder bis zu zwei Dritteln der Lauffläche. Diese Fläche entspricht etwa dem Spiegelbild der Gegenlauffläche des Kettengliedes 2 oder ist zumindest spiegelbildähnlich oder dieser Kontur angenähert. Die entsprechende Kontur wird in das Neuteil jeweils eingearbeitet, wobei diese Kontur einer Kontur entspricht, die sich bei einem gemäß Stand der Technik ausgebildeten Leitrad nach langer Bewegungsdauer selbständig einstellen würde.

Auch hierbei sind die Radienverhältnisse R zu der Breite der entsprechenden Lauffläche b und die Übergangsradien r im Verhältnis zur Breite der Lauffläche b in der Weise realisiert, wie dies in den Patentansprüchen ausgedrückt ist.

Anhand der Figur 24 sind die gleichen Verhältnisse auch anhand einer Laufrolle 14 gezeigt. Dabei ist die entsprechende Konturausbildung lediglich im Bereich 2 der Lauffläche vorgesehen, während der Bereich 20 ebenso wie bei den vorbeschriebenen Ausführungsformen ausgebildet sein kann, insbesondere linear und parallel zur Drehachse 22 der Laufrolle oder auch des Leitrades.

Die Erfindung ist nicht auf die dargestellten Ausführungsformen beschränkt sondern im Rahmen der Patentansprüche 1 bis 28 variabel.

## Patentansprüche

1. Kettenglied für Gleisketten, beispielsweise gekröpfte Gliedausführung, Förderketten, beispielsweise nicht gekröpfte Gliedausführung, oder für ähnliche Kettentypen,
**dadurch gekennzeichnet,** daß die Laufflächenkontur des Gliedes (3) im Querschnitt des Laufflächenkopfes quer (90°) zur Laufrichtung einer nichtlinearen Funktion entspricht, vorzugsweise einer korbbogenartig konvex gewölbten Kurve (2) bezogen auf die gesamte Lauffläche (1), die einer festigkeits- und/oder verschleißoptimalen Rollflächengeometrie entspricht oder zumindest angenähert ist, wobei die Form des Laufflächenkopfes besonders bevorzugt in der Weise ausgeführt ist, wie sie sich auf der Grundlage des physikalischen Prinzips des kleinsten Zwanges bei einer normalen betriebsbedingten Bewegung zwischen einem Kettenglied (3) und einer entsprechenden Rollfläche, beispielsweise einer Laufrolle, bei hinreichend langer Bewegungsdauer selbständig einstellt.

2. Kettenglied nach Anspruch 1,
**dadurch gekennzeichnet,** daß die Form der korbbogenartig gewölbten Lauffläche (2) durch die Parameterkombinationen R/b ≈ 2,4 bis 3,1 und r/b ≈ 0,05 bis 0,11 ausgeführt ist, wobei mit dem Parameter R der Kugelradius des Korbbogenbodens, mit r der Übergangsradius vom Korbbogen zu den Auslaufbereichen des Korbbogenbodens bezeichnet ist und mit b der Gesamtdurchmesser des Korbbogenbodens bezeichnet ist.

3. Kettenglied nach Anspruch 1 oder 2,
**dadurch gekennzeichnet,** daß auch andere Parameterkombinationen der entsprechenden Radien bzw. Durchmesser zulässig sind, soweit sie sich in Abhängigkeit vom konkreten Anwendungsfall als festigkeits- und/oder verschleißoptimal erweisen.

4. Kettenglied nach einem der Ansprüche 1 bis 3,
**dadurch gekennzeichnet,** daß die Laufflächenkontur nur in den Randbereichen des Laufflächenquerschnittes einer nichtlinearen Funktion, vorzugsweise einer korbbogenartig konvex gewölbten Kurve bezogen auf die gesamte Lauffläche derart entspricht, daß die Radien r und R gemäß einem der Ansprüche 1 bis 3 ausgebildet sind und anschließend in eine lineare oder nahezu lineare Funktion (4) (zum Beispiel eine Gerade) übergehen.

5. Kettenglied nach einem der Ansprüche 1 bis 4,
**dadurch gekennzeichnet,** daß das Parameterverhältnis R/b kleiner ist als 2,4, die Laufflächenkontur jedoch keiner linearen Funktion, insbesondere keiner geraden, nahezu geraden oder geradenähnlichen Kurve entspricht, und in diesem Fall der Radius r gemäß Anspruch 2 ausgebildet ist, vorzugsweise jedoch größer ist als 0,075 b und/oder so realisiert ist, daß sich im Beanspruchungszustand die optimale Laufflächenkontur schnellstmöglich von selbst einstellt.

6. Kettenglied nach einem der Ansprüche 1 bis 4,
**dadurch gekennzeichnet,** daß die Laufflächenkontur nur in den Randbereichen des Laufflächenquerschnittes einer nichtlinearen Funktion, insbesondere einer korbbogenartig konvex gewölbten Kurve bezogen auf die gesamte Lauffläche (2) derart entspricht, daß die Radien r und R gemäß den Ansprüchen 1 bis 5 ausgebildet sind und anschließend in eine lineare oder nahezu lineare Funktion (4), zum Beispiel eine Gerade, übergehen, wobei insbesondere der Radius r auch bei einem Parameterverhältnis von R/b kleiner als 2,4 aus dem in Anspruch 2 dargestellten Verhältnis r/b abgeleitet werden kann und vorzugsweise sogar größer als 0,075 b betragen kann oder anderen optimalen Werten gemäß Anspruch 3 entspricht, wobei zudem der Streckenanteil des nichtlinearen bzw. korbbogenartig gebogenen Abschnittes der Laufflächenkontur zum linearen bzw. nahezu linearen Kurvenabschnitt der Laufflächenkontur bezogen auf die Gesamtbreite b so realisiert ist, daß sich im Beanspruchungszustand die optimale Laufflächenkontur nach den Ansprüchen 1 bis 5 schnellstmöglich von selbst einstellt.

7. Kettenglied nach den Ansprüchen 1 bis 6,
**dadurch gekennzeichnet,** daß das Parameterverhältnis R/b kleiner ist als 2,4, die Laufflächenkontur jedoch keiner linearen Funktion, insbesondere einer geraden, nahezu geraden oder einer geradenähnlichen Kurve entspricht, und in diesem Fall der Radius r gemäß Anspruch 2 ausgebildet ist, vorzugsweise jedoch größer ist als 0,075 b und/oder so realisiert wird, daß sich im Beanspruchungszustand die optimale Laufflächenkontur schnellstmöglich von selbst einstellt.

8. Kettenglied nach einem der Ansprüche 1 bis 7,
**dadurch gekennzeichnet,** daß die zulässigen Härtewerte der Laufflächen (2) zwischen 30 und 60 HRc, vorzugsweise jedoch mit Härtewerten zwischen 40 und 50 HRc betragen, wobei die Grundhärte des Kettengliedes (3) so eingestellt ist, daß unter Einwirkung der durch die Laufrollen wirkenden Druckkraft keine größeren Querschnitts- und Oberflächenbereiche erfassendes Fließen auftritt, insbesondere mit einem zulässigen Streckgrenzenverhältnis von Rₑ/Rₘ gegen 1, vorzugsweise aber einem Streckgrenzenverhältnis von Rₑ/Rₘ um 0,65 unter besonderer Beachtung der Gewährleistung eines hinreichend plastischen Arbeitsvermögens.

9. Kettenglied nach einem der Ansprüche 1 bis 8,
**dadurch gekennzeichnet,** daß das Kettenglied (3) aus üblichen Materialien, nämlich Vergütungsstahl bzw. Sphäroguß oder Stahlguß, vorzugsweise jedoch mit Analysewerten besteht, die die Mangansulfidbildung minimieren, wobei insbesondere beim Einsatz von Manganstählen ein niedriger Schwefelgehalt vorzugsweise von unter 0,02 % eingehalten ist.

10. Kettenglied nach einem der Ansprüche 1 bis 7,
**dadurch gekennzeichnet,** daß das Kettenglied (3) aus Alternativmaterialien, vorzugsweise auf Hartmetallbasis, Faserverbundwerkstoffen, Keramik-Keramik-Verbundwerkstoffen und/oder Ingenieurkeramiken, vorzugsweise auf Basis von Si₃N₄ (Siliziumnitrit) mit weniger als 15 Gewichtsprozent Sinteradditiv, einem Bruchwachstum im unterkritischen Bereich bei einer Bruchzähigkeit KIC kleiner als 20 MPa √m sowie ähnlichen Materialien, wobei die Festigkeit und die Zähigkeit durch Einsatz und Dosierung geeigneter Additive auf ein für den konkreten Anwendungsfall für den Einsatz des Kettengliedes optimalen Wert einzustellen ist, wobei besonders auf Homogenität (Weibull-Modul m) des Gliedwerkstoffes zu achten ist und m > 10 m eingehalten ist.

11. Kettenglied nach einem der Ansprüche 1 bis 10,
**dadurch gekennzeichnet,** daß bei gekröpften Gliedausbildungen die in den Ansprüchen 1 bis 7 dargestellten Laufflächenkonturen und Radien- bzw. Parameterverhältnisse im gesamten Laufflächenbereich (1), d.h. im mittleren Laufflächenbereich und in den Bereichen des Bolzen- bzw. Buchsenauges eingehalten sind.

12. Kettenglied nach einem der Ansprüche 1 bis 10,
**dadurch gekennzeichnet,** daß bei der gekröpften Kettengliedausführungsform die nach den Ansprüchen 1 bis 7 dargestellten Laufflächenformen im mittleren Laufflächenbereich realisiert sind und die Laufflächenkontur in den Bereichen des Bolzen- bzw. Buchsenauges, d.h. im Scharnierbereich zwischen zwei Kettensegmenten, so ausgeführt ist, daß sich in diesem Bereich die nach den Ansprüchen 1 bis 7 ergebende Laufflächenkontur (2) jeweils über den Querschnitt beider Kettenglieder (3) darstellt.

13. Kettenglied nach einem der Ansprüche 1 bis 10,
**dadurch gekennzeichnet,** daß die Kontur der Seitenflanken (8) (ein- und/oder beidseitig) der Laufflächen (2) des Kettengliedes (3) quer (90°) zur Laufrichtung einer nichtlinearen Funktion, vorzugsweise einer korbbogenartig konvex gekrümmten Kurve entsprechen.

14. Kettenglied nach Anspruch 13,
**dadurch gekennzeichnet,** daß die korbbogenartig konvex gekrümmte Kurve der Seitenflanken (8) der Laufflächen (2) über die gesamte Länge oder auch nur in Teilbereichen des Kettengliedes (3) in ihren Radien R und r vorzugsweise so ausgebildet sind, daß die Parameterkombinationen R/b1 den Werten ≈ 2,4 bis 3,1 und r/b1 den Werten ≈ 0,05 bis 0,11 entsprechen oder unter Berücksichtigung unterschiedlicher Kettengliedausführungsformen so optimiert sind, daß sich in Abhängigkeit vom konkreten Anwendungsfall beim praktischen Einsatz eine festigkeits- und/oder verschleißoptimale Kontur schnellstmöglich von selbst einstellt.

15. Leitrad zur Führung und/oder Umlenkung bzw. zum Spannen von Gleisketten, Transportketten oder ähnlichen Kettenausführungsformen, insbesondere nach den Ansprüchen 1 bis 13,
**dadurch gekennzeichnet,** daß die Kontur der Lauffläche (10) oder der Laufflächen des Leitrades (9) quer (90°) zur Laufrichtung im Querschnitt einer nichtlinearen Funktion entspricht, vorzugsweise einer korbbogenartig konkav gekrümmten Kurve, die einer festigkeits- und/oder verschleißoptimalen Rollflächengeometrie entspricht oder zumindest angenähert ist, wobei die Form der Lauffläche (10) oder Laufflächen (10) vorzugsweise so ausgeführt ist, wie sie sich auf der Grundlage des physikalischen Prinzips des kleinsten Zwanges bei einer normalen Bewegung zwischen einer Lauffläche (10) zum Beispiel der eines Leitrades (9) und einem entsprechenden Gegenstück, zum Beispiel einem Kettenglied, bei hinreichend langer Bewegungsdauer selbständig einstellt.

16. Leitrad nach Anspruch 15,
**dadurch gekennzeichnet,** daß die Radien R und r der korbbogenartigen konkaven Krümmung der Lauffläche (10) oder der Laufflächen (10) vorzugsweise durch die Parameterkombinationen R/b ≈ 2,4 bis 3,1 und r/b ≈ 0,05 bis 0,11 charakterisiert sind oder, unter Berücksichtigung unterschiedlicher Ausführungsformen von Leiträdern (9) und entsprechenden Ketten bzw. Kettengliedern, als Gegenstück zur Leitradlauffläche so ausgeführt sind, daß sich eine festigkeits- und/oder verschleißoptimale Laufflächenkontur gemäß Anspruch 15 im Praxiseinsatz schnellstmöglich von selbst einstellt.

17. Leitrad nach Anspruch 15,
**dadurch gekennzeichnet,** daß die nichtlineare Kurvenform der Kontur der Lauffläche (10), vorzugsweise die korbbogenartig konkav gekrümmte Kontur, nur teilweise realisiert ist, das heißt die Kantenradien, zum Beispiel der Kantenradius r, sowie die Laufflächenradien, zum Beispiel der Laufflächenradius R, so ausgeführt sind, daß sie in eine lineare oder nahezu lineare Funktion (11) der Laufflächenkontur, zum Beispiel einer Geraden, übergehen, wobei die lineare Kurvenfunktion (11) auch in einem Winkel zu einer angenommenen waagerechten Lauffläche (10) angeordnet sein kann und die Kurvenkombination so realisiert ist, daß sich die festigkeits- und/oder verschleißoptimale Laufflächenkontur im Praxiseinsatz schnellstmöglich von selbst einstellt.

18. Leitrad nach einem der Ansprüche 15 bis 17,
**dadurch gekennzeichnet,** daß die Kontur der Seitenführungsflächen (12) des Mittelbundes des Leitrades (9) quer (90°) zur Laufrichtung im Querschnitt einer nichtlinearen Funktion entspricht, vorzugsweise einer korbbogenartig konkav gewölbten Kurve und die Radien R und r der korbbogenartig gewölbten Kurve vorzugsweise durch die Verhältnisse R/b1 ≈ 2,4 bis 3,1 und r/b1 ≈ 0,05 bis 0,11 charakterisiert sind oder die nichtlineare Funktion so realisiert ist, daß sich eine festigkeits- und/oder verschleißoptimale Kontur der Seitenführungsflächen des Mittelbundes des Leitrades im Praxiseinsatz schnellstmöglich von selbst einstellt.

19. Leitrad nach Anspruch 18,
**dadurch gekennzeichnet,** daß die nichtlineare, vorzugsweise die korbbogenartig konkav gekrümmte Kontur der Seitenführungsflächen (12) des Mittelbundes des Leitrades (9) nur teilweise realisiert ist, das heißt die Kantenradien, zum Beispiel der Kantenradius r sowie die Laufflächenradien, zum Beispiel der Laufflächenradius R, so ausgeführt sind, daß sie in eine lineare bzw. nahezu lineare Funktion (13), zum Beispiel eine Gerade, der Kontur der Seitenführungsflächen des Mittelbundes des Leitrades übergehen und dabei so realisiert sind, daß durch diese Kurvenkombination sich die festigkeits- und/oder verschleißoptimale Laufflächenkontur im Praxiseinsatz schnellstmöglich von selbst einstellt.

20. Leitrad nach einem der Ansprüche 15 bis 19,
**dadurch gekennzeichnet,** daß die nichtlineare, vorzugsweise korbbogenartig konkav gekrümmte Kontur der Lauffläche (10) oder der Laufflächen des Leitrades (9) sowie die nichtlineare, vorzugsweise korbbogenartig gekrümmte Kontur der Seitenführungsfläche (12) oder -flächen des Mittelbundes des Leitrades so miteinander kombiniert werden, daß beide Kurvenformen sowohl auf rein nichtlinearer Basis als auch auf kombiniert linearer/nichtlinearer Basis so ineinander übergehen, daß eine festigkeits- und/oder verschleißoptimale Gesamtkontur entsteht und die Radien R bzw. r der korbbogenartig konkav gekrümmten Gesamtkontur, vorzugsweise durch die Verhältnisse R/b bzw. R/b1 ≈ 2,4 bis 3,1 und r/b bzw. r/b1 ≈ 0,05 bis 0,11 charakterisiert sind.

21. Leitrad nach einem der Ansprüche 15 bis 20,
**dadurch gekennzeichnet,** daß die Laufflächen (10) sowie die Seitenführungsflächen (12) des Mittelbundes des Leitrades (9) aus Stahl oder Gußeisen bestehen und die nichtlinearen bzw. kombiniert linear/nichtlinearen Konturen gemäß Anspruch 15 bis 20 durch Fertigungsverfahren vor, während oder nach Herstellung des Leitrades eingebracht sind, wobei alternativ auch die Laufflächen (10) bzw. Seitenführungsflächen (12) des Mittelbundes oder der gesamte Laufflächenbereich (Leitradbandage) oder auch das gesamte Leitrad (9) oder Teile davon aus Alternativmaterialien, vorzugsweise auf Hartmetallbasis, Faserverbundwerkstoffen, Keramik-Keramik-Verbundwerkstoffen und/oder Ingenieurkeramiken, vorzugsweise auf Basis von Si₃N₄ (Siliziumnitrit) mit weniger als 15 Gewichtsprozent Sinteradditiv, einem Bruchwachstum im unterkritischen Bereich bei einer Bruchzähigkeit KIC kleiner als 20 MPa √m sowie ähnlichen Materialien bestehen.

22. Leitrad nach einem der Ansprüche 15 bis 21,
**dadurch gekennzeichnet,** daß die Werkstoffe, die Härtewerte und die Streckgrenzen des Materiales, aus welchem das Leitrad (9) oder Teil des Leitrades gebildet sind, den Ausbildungen gemäß Anspruch 1 bis 14 entsprechen.

23. Tragrolle zur Abstützung und Führung von Gleisketten, Transportketten und/oder ähnlichen Kettentypen sowie Laufrollen zur Gewährleistung der Rollfunktion und Übernahme der Krafteinwirkung in bezug auf durch Gleisketten, Transportketten und/oder Ketten ähnlicher Ausführungsform und Funktionen notwendig werdender Ablaufmechanismen,
**dadurch gekennzeichnet,** daß die Kontur der Lauffläche (15,16) oder Laufflächen (15,16) und Seitenflächen der Spurkränze (17,18) sowie Auswahl der Materialien so gewählt und getroffen sind, wie dies in den Ansprüchen 1 bis 22 gekennzeichnet ist.

24. Kettenglied nach einem der Ansprüche 1 bis 14,
**dadurch gekennzeichnet,** daß die Laufflächenkontur des Gliedes (3) im Querschnitt des Laufflächenkopfes quer (90°) zur Laufrichtung nur an den bezüglich eines Kettensegmentes mit zwei zueinander parallelen Kettengliedern außenliegenden Laufflächenbereichen einer nichtlinearen Funktion entspricht, vorzugsweise einer korbbogenförmig oder logarithmisch konvex gekrümmten Kurve, als festigkeits- und/oder verschleißoptimierten Laufflächengeometrie, vorzugsweise über die halbe Breite oder bis zu zwei Dritteln der Breite der Lauffläche jedes Kettengliedes, wobei die Form dieses Teils der Laufflächenkontur besonders bevorzugt in der Weise ausgeführt ist, wie sie sich auf der Grundlage des mechanischen Prinzips des kleinsten Zwanges bei einer normalen betriebsbedingten Bewegung und Belastung zwischen einem Kettenglied unter Berücksichtigung des gesamten Kettensegmentes, im Zusammenwirken, beispielsweise mit einer Laufrolle bei hinreichend langer Bewegungsdauer selbständig einstellen kann.

25. Kettenglied nach einem der Ansprüche 1 bis 24,
**dadurch gekennzeichnet,** daß die Laufflächenkontur in dem Bereich der Lauffläche, in welchem die nichtlineare Funktion nicht realisiert ist in eine andere Kurvenform, vorzugsweise eine lineare oder angenähert lineare, besonders bevorzugt einer in Parallelität oder angenäherter Parallelität zur Gegenlauffläche (z.B. bezogen auf herkömmliche Ausführungsformen der Lauffläche einer Rolle) geraden oder geradenähnlichen Kurve übergeht.

26. Kettenglied nach einem der Ansprüche 1 bis 25,
**dadurch gekennzeichnet,** daß der Rand der Lauffläche in dem Bereich der Laufflächenkontur, in welcher die nichtlineare Funktion nicht realisiert ist, durch den Übergangsradius r, vorzugsweise in der Parameterkombination r/b ≈ 0,05 bis 0,11 ausgeführt wird.

27. Leitrad nach einem der Ansprüche 15 bis 22,
**dadurch gekennzeichnet,** daß die Kontur der Lauffläche (10) oder der Laufflächen des Leitrades (9) quer (90°) zur Laufrichtung im Querschnitt einer nichtlinearen Funktion, vorzugsweise einer korbbogenartig oder logarithmisch konkav gekrümmten Kurve, unter der Wirkung einer adäquat gekrümmten Gegenlauffläche (z.B. des Kettengliedes) als festigkeits- und/oder verschleißoptimalen Rollenflächengeometrie, bezogen auf einen Teil, z.B. die halbe bzw. zwei Drittel der Lauffläche, vorzugsweise dem Spiegelbild der Gegenlauffläche (z.B. der des Kettengliedes) bzw. einer spiegelbildähnlichen oder dieser angenäherten Kontur (z.B. unter Berücksichtigung der Laufflächenbreite des Leitrades) entspricht und wie sie sich auf der Grundlage des mechanischen Prinzips des kleinsten Zwanges bei einer normalen Bewegung zwischen einer Lauffläche, z.B. der eines Leitrades und einem entsprechenden Gegenstück, z.B. einem Kettenglied, bei hinreichend langer Bewegungsdauer selbständig einstellt.

28. Tragrolle nach Anspruch 23,
**dadurch gekennzeichnet,** daß diese analog der Ausbildung nach einem der Ansprüche 24 bis 27 ausgebildet ist.

## Claims

1. A track link for tracked crawlers, for example a cranked link model, conveyor chains, for example a non-cranked link model, or for similar chain types,
**characterised in that** the contour of the running surface of the link (3), in the cross section of the head of the running surface perpendicular (90°) to the running direction, corresponds to a non-linear function, preferably a curve (2) convexly arched like a compound curve, relative to the overall running surface (1), which corresponds to or at least approaches an optimally stable and/or wear-resistant roller surface geometry, whereby the shape of the running surface head is particularly preferably designed to be self-setting on the basis of the physical principle of least constraint with a normal operating movement between a track link (3) and a corresponding roller surface, for example of a track roller, for a sufficiently long duration of movement.

2. A track link according to Claim 1,
**characterised in that** the shape of the running surface (2) arched like a compound curve is produced by the parameter combinations R/b ≈ 2.4 to 3.1 and r/b ≈ 0.05 to 0.11, whereby the spherical radius of the bottom of the compound curve is designated by the parameter R, the transitional radius from the compound curve to the end regions of the bottom of the compound curve is designated by r and the overall diameter of the bottom of the compound curve is designated by b.

3. A chain link according to Claim 1 or 2,
**characterised in that** other parameter combinations of the corresponding radii or diameters respectively are also permissible, provided that they prove to be to be optimally stable and/or wear-resistant in dependence on the concrete application.

4. A track link according to one of Claims 1 to 3,
**characterised in that** only in the edge regions of the running surface cross section does the running surface contour correspond to a non-linear function, preferably a curve convexly arched like a compound curve, relative to the overall running surface so that the radii r and R are designed in accordance with one of Claims 1 to 3 and subsequently change into a linear or almost linear function (4) (for example a straight line).

5. A track link according to one of Claims 1 to 4,
**characterised in that** the parameter ratio R/b is less than 2.4, but the running surface contour does not correspond to a linear function, especially not a curve which is straight, almost straight or similar to a straight line, and in this case the radius r is designed according to Claim 2, but is preferably greater than 0.075 b and/or is produced so that in the stressed state the optimal running surface contour is self-setting as quickly as possible.

6. A track link according to one of Claims 1 to 4,
**characterised in that** only in the edge regions of the running surface cross section does the running surface contour correspond to a non-linear function, particularly a curve convexly arched like a compound curve relative to the overall running surface (2) so that the radii r and R are designed in accordance with Claims 1 to 5 and subsequently change into a linear or almost linear function (4), for example a straight line, whereby in particular the radius r, even with a parameter ratio of R/b of less than 2.4, can be derived from the ratio r/b represented in Claim 2 and may preferably even be more than 0.075 b or corresponds to other optimal values specified in Claim 3, whereby in addition the section of the portion, which is non-linear or curved like a compound curve, of the running surface contour to the linear or respectively almost linear curve portion of the running surface contour relative to the overall width b is produced so that in the stressed state the optimal running surface contour according to Claims 1 to 5 is self-setting as quickly as possible.

7. A track link according to Claims 1 to 6,
**characterised in that** the parameter ratio R/b is less than 2.4, however the running surface contour does not correspond to a linear function, in particular a straight, nearly straight or line-like curve, and in this case the radius r is designed according to Claim 2, but is preferably more than 0.075 b and/or is produced so that in the stressed state the optimal running surface contour is automatically set as quickly as possible.

8. A track link according to one of Claims 1 to 7,
**characterised in that** the permissible hardness values of the running surfaces (2) lie between 30 and 60 HRc, but preferably with hardness values of between 40 and 50 HRc, with the basic hardness of the track link (3) being set so that with the action of the compressive force acting by the track rollers flow including no larger cross sectional and surface regions occurs, in particular with a permissible limit of elasticity ratio of Rₑ/Rₘ of about 1, but preferably a limit of elasticity ratio of Rₑ/Rₘ by 0.65 with special consideration of the guarantee of a sufficiently plastic work capacity.

9. A track link according to one of Claims 1 to 8,
**characterised in that** the track link (3) is made of conventional materials, namely tempering steel or spheroidal graphite iron or cast steel, but preferably having analysis values which minimise the formation of manganese sulphide, with a low sulphur content preferably of less than 0.02 % being observed with the use of manganese steels.

10. A track link according to one of Claims 1 to 7,
**characterised in that** the track link (3) is made of alternative materials, preferably on a hard metal base, fibre-reinforced materials, ceramic-ceramic composite materials and/or engineering ceramics, preferably on a base of Si₃N₄ (silicon nitrite) with a sinter additive of less than 15 % by weight, a fracture growth in the subcritical range with a fracture toughness KIC of less than 20 MPa √m and also similar materials, whereby the stability and toughness are adjusted by the addition and metering of suitable additives to a value optimal for the concrete application for the use of the track link, whereby special attention is to be paid to homogeneity (Weibull modulus m) of the material of the link and m > 10 m is observed.

11. A track link according to one of Claims 1 to 10,
**characterised in that** with cranked link designs the running surface contours and respectively radii and parameter ratios represented in Claims 1 to 7 are observed in the entire running surface region (1), i.e. in the central running surface region and in the regions of the pin or bush eye respectively.

12. A track link according to one of Claims 1 to 10,
**characterised in that** with the cranked track link embodiment the running surface shapes represented according to Claims 1 to 7 are produced in the central running surface region and the running surface contour in the regions of the pin or bush eye, i.e. in the hinge region between two track segments, is designed so that in this region the running surface contour (2) produced according to Claims 1 to 7 is represented over the cross section of both track links (3) in each case.

13. A chain link according to one of Claims 1 to 10,
**characterised in that** the contour of the lateral flanks (8) (on one or both sides) of the running surfaces (2) of the chain link (3) perpendicular (90°) to the running direction correspond to a non-linear function, preferably a curve convexly bowed like a compound curve.

14. A track link according to Claim 13,
**characterised in that** the curve, convexly bowed like a compound curve, of the lateral flanks (8) of the running surfaces (2) are preferably constructed with respect to their radii R and r over the whole length or also only in partial regions of the track link (3) so that the parameter combinations R/b1 correspond to the values ≈ 2.4 to 3.1 and r/b1 to the values ≈ 0.05 to 0.11 or taking into consideration various track link embodiments are optimised so that an optimally stable and/or wear-resistant contour is automatically set as quickly as possible in dependence on the concrete application.

15. An idler for guiding and/or deflecting or respectively for tensioning tracked crawlers, chain conveyors or similar chain embodiments, in particular according to Claims 1 to 13,
**characterised in that** the contour of the running surface (10) or of the running surfaces of the idler (9) perpendicular (90°) to the running direction in cross section corresponds to a non-linear function, preferably a curve concavely bowed like a compound curve, which corresponds to or at least approaches an optimally stable and/or wear-resistant roller surface geometry, whereby the shape of the running surface (10) or running surfaces (10) is preferably designed to be self-setting on the basis of the physical principle of least constraint with a normal movement between a running surface (10) for example that of an idler (9) and a corresponding counterpart, for example a track link, for a sufficiently long duration of movement.

16. An idler according to Claim 15,
**characterised in that** the radii R and r of the compound curve-like concave curvature of the running surface (10) or of the running surfaces (10) are preferably characterised the parameter combinations R/b ≈ 2.4 to 3.1 and r/b ≈ 0.05 to 0.11 or, taking into consideration various embodiments of idlers (9) and corresponding tracks or track links, are constructed as a counterpart to the idler running surface so that an optimally stable and/or wear-resistant running surface contour according to Claim 15 is automatically set as quickly as possible in practical use.

17. An idler according to Claim 15,
**characterised in that** the non-linear curved shape of the contour of the running surface (10), preferably the contour concavely curved like a compound curve, is only partially produced, i.e. the edge radii, for example the edge radius r, and also the running surface radii, for example the running surface radius R, are designed so that they change into a linear or almost linear function (11) of the running surface contour, for example of a straight line, whereby the linear curve function (11) may also be disposed at an angle to an assumed horizontal running surface (10) and the curve combination is produced so that the optimally stable and/or wear-resistant running surface contour is self-setting as quickly as possible in practical use.

18. An idler according to one of Claims 15 to 17,
**characterised in that** the contour of the lateral guide surfaces (12) of the central collar of the idler (9) perpendicular (90°) to the running direction in cross section corresponds to a non-linear function, preferably a curve concavely arched like a compound curve and the radii R and r of the curve arched like a compound curve are preferably characterised by the ratios R/bl ≈ 2.4 to 3.1 and r/bl ≈ 0.05 to 0.11 or the non-linear function is produced so that an optimally stable and/or wear resistant contour of the lateral guide surfaces of the central collar of the idler is self-setting as quickly as possible in practical use.

19. An idler according to Claim 18,
**characterised in that** the non-linear contour, preferably concavely curved like a compound curve, of the lateral guide surfaces (12) of the central collar of the idler (9) is only partially produced, i.e. the edge radii, for example the edge radius r and also the running surface radii, for example the running surface radius R, are designed so that they merge into a linear or almost linear function (13) for example a straight line, of the contour of the lateral guide surface of the central collar of the idler and at the same time are produced so that by this curve combination the optimally stable and/or wear-resistant running surface contour is self-setting, as quickly as possible in practical use.

20. An idler according to one of Claims 15 to 19,
**characterised in that** the non-linear contour, preferably concavely curved like a compound curve, of the running surface (10) or of the running surfaces of the idler (9) and also the non-linear contour, preferably curved like a compound curve, of the lateral guide surface (12) or surfaces of the central collar of the idler are combined with one another so that both curve shapes merge into one another both on a purely non-linear basis and also on a combined linear/non-linear basis so that an optimally stable and/or wear-resistant overall contour is produced and the radii R or r respectively of the overall contour concavely curved like a compound curve are preferably characterised by the ratios R/b or respectively R/b1 ≈ 2.4 to 3.1 and r/b or respectively r/b1 ≈ 0.05 to 0.11.

21. An idler according to one of Claims 15 to 20,
**characterised in that** the running surfaces (10) and also the lateral guide surfaces (12) of the central collar of the idler (9) are made of steel or cast iron and the non-linear or respectively the combined linear/non-linear contours according to Claims 15 to 20 are produced by production methods before, during or after the manufacture of the idler, whereby alternatively the running surfaces (10) or respectively the lateral guide surfaces (12) of the central collar or the entire running surface region (idler hoop) or also the entire idler (9) or parts thereof are made of alternative materials, preferably on a hard metal base, fibre-reinforced materials, ceramic-ceramic composite materials and/or engineering ceramics, preferably on a base of Si₃N₄ (silicon nitrite) having a sinter additive of less than 15 % by weight, a fracture growth in the subcritical range with a fracture toughness KIC of less than 20 MPa √m and also similar materials.

22. An idler according to one of Claims 15 to 21,
**characterised in that** the materials, the hardness values and the limits of elasticity of the material from which the idler (9) or part of the idler are formed correspond to the models according to Claims 1 to 14.

23. A support roller for supporting and guiding tracked crawlers, chain conveyors and/or similar chain types and also track rollers for guaranteeing the rolling function and transfer of the force action in relation to run-off mechanisms becoming necessary by tracked crawlers, chain conveyors and/or chains of similar design and function,
**characterised in that** the contour of the running surface (15, 16) or running surfaces (15, 16) and lateral surfaces of the wheel flanges (17, 18) and also the selection of the materials are chosen and made as characterised in Claims 1 to 22.

24. A track link according to one of Claims 1 to 14,
**characterised in that** only at the outer running surface regions with respect to a track segment having two track links does the running surface contour of the link (3) in the cross section of the running surface head perpendicular (90°) to the running direction correspond to a non-linear function, preferably a curve bowed in the shape of a compound curve or logarithmically convexly bowed, as running surface geometry optimised with respect to stability and/or wear resistance, preferably over half the width or up to two thirds the width of the running surface of each track link, whereby the shape of this part of the running surface contour is particularly preferably designed to be self-setting on the basis of the mechanical principle of least constraint in a normal operating movement and loading between a track link taking into consideration the entire track segment, in cooperation, for example, with a track roller, for a sufficiently long duration of movement.

25. A track link according to one of Claims 1 to 24,
**characterised in that** in the region of the running surface in which the non-linear function is not produced, the running surface contour changes into another curve shape, preferably a linear or almost linear curve, particularly preferably a curve which is straight or similar to a straight line in parallelism or approximate parallelism to the counter running surface (e.g. in relation to conventional embodiments of the running surface of a roller).

26. A track link according to one of Claims 1 to 25,
**characterised in that** in the region of the running surface contour in which the non-linear function is not produced, the edge of the running surface is designed by the transitional radius r, preferably in the parameter combination r/b ≈ 0.05 to 0.11.

27. An idler according to one of Claims 15 to 22,
**characterised in that** the contour of the running surface (10) or of the running surfaces of the idler (9) perpendicular (90°) to the running direction in the cross section corresponds to a non-linear function, preferably a curve bowed like a compound curve or logarithmically concavely bowed, under the action of an adequately curved counter running surface (e.g. of the track link) as optimally stable and/or wear-resistant roller surface geometry, relative to a part, e.g. half or two thirds respectively of the running surface, preferably the mirror image of the counter running surface (e.g. of the track link) or respectively a contour similar to a mirror image or approaching it (e.g. taking into consideration the width of the running surface of the idler) and is self-setting on the basis of the mechanical principle of least constraint in a normal movement between a running surface, e.g. that of an idler and a corresponding counterpart, e.g. a track link, for a sufficiently long duration of movement.

28. A support roller according to Claim 23,
**characterised in that** it is constructed similarly to the design according to one of Claims 24 to 27.

## Revendications

1. Maillon de chaîne pour chenille, par exemple, maillon de type contre-coudé, pour chaîne de convoyage, par exemple, maillon de type non contre-coudé ou pour des types de chaînes similaires,
caractérisé en ce que le profil de la surface de roulement du maillon (3) correspond dans la vue en coupe transversale, en haut de la surface de roulement, perpendiculairement (90 °) par rapport au sens de la marche, à une fonction non-linéaire, de préférence, à une courbe (2) de courbure convexe de type en anse de panier relativement à la surface de roulement (1) totale, qui correspond à une géométrie de surface de roulement optimale quant à la résistance mécanique et/ou la résistance à l'usure ou qui, du moins, s'en rapproche, où la forme du sommet de la surface de roulement est conçue de façon particulièrement privilégiée quant à la manière avec laquelle elle s'adapte d'elle-même au principe physique de base de la contrainte mécanique minimum lors d'un mouvement effectué dans des conditions de fonctionnement normal entre un maillon de chaîne (3) et sa surface de roulement correspondante, par exemple, un galet de roulement, pour une durée de mouvement suffisamment longue.

2. Maillon de chaîne selon la revendication 1,
caractérisé en ce que la forme de la surface de roulement (2) de courbure en anse de panier est obtenue grâce aux combinaisons paramétriques R/b ≈ 2,4 à 3,1 et r/b ≈ 0,05 à 0,11, où le rayon sphérique du fond en anse de panier est désigné par le paramètre R, où le rayon de transition de l'anse de panier vers les zones de sortie du fond en anse de panier est désigné par le paramètre r et où le paramètre global du fond en anse de panier est désigné par le paramètre b.

3. Maillon de chaîne selon la revendication 1 ou 2,
caractérisé en ce que d'autres combinaisons paramétriques des rayons correspondants ou, le cas échéant, des diamètres correspondants sont autorisées, du moment qu'elles s'avèrent correspondre à une solution optimale quant à la résistance mécanique et/ou la résistance à l'usure dans le cadre d'une utilisation concrète.

4. Maillon de chaîne selon l'une des revendications 1 à 3,
caractérisé en ce que le profil de la surface de roulement correspond dans ce cas uniquement dans les zones des bords de la section transversale de la surface de roulement, à une fonction non-linéaire, de préférence, à une courbe de courbure convexe de type en anse de panier relativement à la surface totale de roulement, les rayons r et R étant constitués selon l'une des revendications 1 à 3, et se transforme ensuite en une fonction linéaire ou quasiment linéaire (4) (par exemple, une ligne droite).

5. Maillon de chaîne selon l'une des revendications 1 à 4,
caractérisé en ce que le rapport paramétrique R/b est inférieur à 2,4, en ce que, toutefois, le profil de la surface de roulement ne correspond à aucune fonction linéaire, en particulier, à aucune courbe droite, à aucune courbe pratiquement droite ou à aucune courbe ressemblant à une droite et que, dans ce cas, le rayon r est caractérisé d'après la revendication 2 et est toutefois, de préférence, supérieur à 0,075 b et/ou est choisi de telle sorte que le profil de la surface de roulement optimal s'adapte de lui-même et le plus rapidement possible à la situation de contrainte.

6. Maillon de chaîne selon l'une des revendications 1 à 4,
caractérisé en ce que le profil de la surface de roulement correspond dans ce cas uniquement dans les zones des bords de la section transversale de la surface de roulement, à une fonction non-linéaire, en particulier, à une courbe de courbure convexe de type en anse de panier relativement à la surface de roulement totale (2), que les rayons r et R sont caractérisés par les revendications 1 à 5, et qu'il se transforme ensuite en une fonction linéaire ou quasiment linéaire (4), par exemple, en une ligne droite où le rayon r, en particulier, peut être déduit du rapport r/b présenté dans la revendication 2, de même avec un rapport paramétrique R/b inférieur à 2,4, et peut même, et de préférence, être supérieur à 0,075 b ou correspondre à d'autres valeurs optimales selon la revendication 3 et où, en outre, la portion du segment non-linéaire ou le cas échéant courbée en anse de panier du profil de surface de roulement vis-à-vis du segment de courbe linéaire ou pratiquement linéaire du profil de la surface de roulement par rapport à la largeur totale b est réalisée de telle sorte que, en situation de contrainte, le profil de surface de roulement optimale s'adapte de lui-même et le plus rapidement possible comme indiqué dans les revendications 1 à 5.

7. Maillon de chaîne selon les revendications 1 à 6,
caractérisé en ce que le rapport paramétrique R/b est inférieur à 2,4, que toutefois le profil de surface de roulement ne correspond à aucune fonction linéaire, en particulier, à aucune courbe droite, pratiquement droite ou rappelant une droite et, dans ce cas, le rayon r qui est déterminé d'après la revendication 2 est toutefois, de préférence, supérieur à 0,075 b et/ou est déterminé de telle sorte qu'en situation de contrainte, le profil de la surface de roulement optimal s'adapte de lui-même et le plus rapidement possible.

8. Maillon de chaîne selon l'une des revendications 1 à 7,
caractérisé en ce que les valeurs de dureté admissibles de la surface de roulement (2) se situent entre 30 et 60 HRc, si possible entre 40 et 50 HRc, où la dureté primitive du maillon de chaîne (3) est choisie de telle sorte que, sous l'action de la force de pression qui s'exerce par l'intermédiaire des galets de roulement, aucun phénomène de fluage mettant en jeu des zones de section et des zones de surface supérieure ne se produise, en particulier, pour un rapport de limite élastique admissible Rₑ/Rₘ situé aux alentours de 1, de préférence, pour un rapport de limite élastique Rₑ/Rₘ situé aux alentours de 0,65, en veillant particulièrement à assurer une aptitude au travail plastique suffisante.

9. Maillon de chaîne selon l'une des revendications 1 à 8,
caractérisé en ce que le maillon de chaîne (3) est constitué par des matériaux courants, à savoir, de l'acier traité ou, le cas échéant, de la fonte sphérolithique ou de l'acier coulé, mais avec si possible des valeurs de composition qui minimisent la formation de sulfure de manganèse à l'occasion de quoi, en particulier lors de la mise en oeuvre d'aciers au manganèse, on respecte une teneur si possible inférieure à 0,02 %.

10. Maillon de chaîne selon l'une des revendications 1 à 7,
caractérisé en ce que le maillon de chaîne (3) doit être réalisé à partir de matériaux alternatifs, de préférence, à partir des matériaux à base de métaux durs, des matériaux composites renforcés par des fibres, des matériaux composites céramico-céramiques et/ou des céramiques techniques de préférence à base de Si₃N₄ (nitrure de silicium) avec moins de 15 % en poids d'additifs frittés et avec une augmentation de la résistance à la rupture dans la zone sous critique pour une ténacité à la rupture KIC inférieure à 20 MPa √m, ainsi que des matériaux du même type pour lesquels la résistance et la ténacité mécanique doivent être fixées grâce à une mise en oeuvre et à un dosage d'additifs appropriés pour une valeur optimale, dans le cadre concret de la mise en oeuvre du maillon de chaîne, circonstance dans laquelle on doit particulièrement faire attention à l'homogénéité (module de Weibull m) du matériau qui constitue le chaînon et où l'on choisit une valeur de m inférieure à 10.

11. Maillon de chaîne selon l'une des revendications 1 à 10,
caractérisé en ce que l'on conserve les profils de la surface de roulement décrits dans les revendications 1 à 7 et les rapports des rayons ou, le cas échéant, les rapports des paramètres pour la zone de la surface de roulement dans son ensemble (1), c'est-à-dire, pour la zone médiane de la surface de roulement et pour les zones de l'axe ou de la douille, pour les configurations contre-coudées du maillon de chaîne.

12. Maillon de chaîne selon l'une des revendications 1 à 10,
caractérisé en ce que, dans le cas d'une configuration contre-coudée des maillons de chaîne, les formes de la surface de roulement qui sont décrites dans les revendications 1 à 7 sont mises en oeuvre dans la zone méiane de la surface de roulement et en ce que le profil de la surface de roulement dans les zones de l'axe ou de la douille, c'est-à-dire, dans la zone charnière entre deux segments de chaîne, est choisi de telle sorte que, dans cette zone, le profil de la surface de roulement (2) que l'on a décrit dans les revendications 1 à 7 représente respectivement les 2 maillons de chaîne (3) vus en coupe transversale.

13. Maillon de chaîne d'après l'une des revendications 1 à 10,
caractérisé en ce que le profil des flancs latéraux (8) (d'un et/ou des deux côtés) des surfaces de roulement (2) du maillon de chaîne (3) perpendiculairement (90 °) au sens de la marche correspond à une fonction non-linéaire, de préférence, à une courbe de courbure convexe de type en anse de panier.

14. Maillon de chaîne selon la revendication 13,
caractérisé en ce que la courbe de courbure convexe de type en anse de panier des flancs latéraux (8) des surfaces de roulement (2), est constituée, que ce soit sur la longueur totale ou bien uniquement dans certaines zones du maillon de chaîne (3), par ses rayons R et r de telle sorte que, de préférence, les combinaisons R/bl ≈ 2,4 à 3,1 et que les combinaisons paramétriques r/bl ≈ 0,05 à 0,11 ou bien, sont optimisées en tenant compte des différentes formes de mise en oeuvre des maillons de chaîne, de telle sorte qu'un profil optimal quant à la résistance mécanique et/ou la résistance à l'usure s'adapte de lui-même et le plus rapidement possible dans le cadre d'une utilisation pratique.

15. Roue directrice pour la conduite et/ou le renvoi ou pour la tension des chenilles, des chaînes de transfert ou autres types de chaînes semblables, en particulier, d'après les revendications 1 à 13,
caractérisée en ce que le profil de la surface de roulement (10) ou des surfaces de roulement de la roue directrice (9) perpendiculairement (90 °) au sens de la marche correspond, vue en coupe transversale, à une fonction non-linéaire, de préférence, à une courbe de courbure concave de type en anse de panier qui correspond à une géométrie de la surface de roulement optimale quant à sa résistance mécanique et/ou sa résistance à l'usure ou qui du moins s'en rapproche, où la forme de la surface de roulement (10) ou des surfaces de roulement (10) est, des préférence, réalisée de telle sorte qu'elle s'adapte d'elle-même lorsque la durée du déplacement est suffisamment longue, de la même façon qu'elle s'adapte au principe physique de base de la contrainte minimale lors d'un mouvement normal entre une surface de roulement (10), par exemple, celle d'une roue directrice (9) et la pièce associée correspondante, par exemple, un maillon de chaîne.

16. Roue directrice d'après la revendication 15,
caractérisée en ce que les rayons R et r de la courbure concave de type en anse de panier de la surface de roulement (10) ou des surfaces de roulement (10) sont caractérisés, de préférence, par des combinaisons paramétriques R/b ≈ 2,4 à 3,1 et des combinaisons paramétriques r/b ≈ 0,05 à 0,11 où, en tenant compte des différents types de roues directrices (9) et des chaînes qui leur correspondent ou, le cas échéant, des maillons de chaîne, en se qu'ils sont, en tant que pièces associées à la surface de roulement de la roue directrice, fabriqués de telle sorte qu'un profil de surface de roulement optimal quant à la résistance mécanique et/ou la résistance à l'usure selon la revendication 15, s'adapte de lui-même et le plus rapidement possible dans le cadre d'une utilisation pratique.

17. Roue directrice selon la revendication 15,
caractérisée en ce que la forme de la courbe non-linéaire du profil de la surface de roulement (10), de préférence, le profil de courbure concave de type en anse de panier, n'est réalisée qu'en partie, c'est-à-dire, que les rayons des flancs, par exemple, le rayon r des flancs, ainsi que les rayons des surfaces de roulement, par exemple, le rayon des surfaces de roulement R, soient réalisés de telle sorte qu'ils se confondent dans une fonction linéaire ou pratiquement linéaire (11) du profil de la surface de roulement, par exemple, avec une droite où les courbes de fonction linéaire (11) peuvent être également choisies selon l'angle par rapport à la surface de roulement (10), par exemple, horizontalement et où la combinaison des courbes est choisie de telle sorte que, dans la pratique, le profil de la surface de roulement s'adapte de lui-même et le plus rapidement possible de façon optimale quant à la résistance mécanique et/ou la résistance à l'usure.

18. Roue directrice selon l'une des revendications 15 à 17,
caractérisée en ce que le profil des surfaces de guidage latéral (12) de l'épaulement médian de la roue directrice (9) perpendiculairement (90 °) au sens de la marche correspond, vu en coupe transversale, à une fonction non-linéaire, de préférence, à une courbe de courbure concave de type en anse de panier et où les rayons R et r de la courbe de courbure de type en anse de panier sont, de préférence, caractérisés par les rapports R/bl ≈ 2,4 à 3,1 et r/bl ≈ 0,05 à 0,11, ou bien la fonction non-linéaire est choisie de telle façon qu'un profil optimal quant à la résistance mécanique et/ou la résistance à l'usure des surfaces de guidage latéral de l'épaulement médian de la roue directrice s'adapte de lui-même et le plus rapidement possible dans le cadre d'une utilisation pratique.

19. Roue directrice selon la revendication 18,
caractérisée en ce que le profil non-linéaire, de préférence, le profil de courbure concave de type en anse de panier des surfaces de guidage latéral (12) de l'épaulement médian de la roue directrice (9) n'est qu'en partie observé, c'est-à-dire que les rayons des bords r, de même que les rayons des surfaces de roulement, par exemple, le rayon de la surface de roulement R, sont choisis de telle sorte qu'ils se confondent, en une fonction linéaire ou, le cas échéant, pratiquement linéaire (13), par exemple, une droite, avec le profil des surfaces de guidage latéral de l'épaulement médian de la roue directrice et qu'ainsi, ils sont fixés de telle sorte que le profil de la surface de roulement optimal quant à la résistance mécanique et/ou la résistance à l'usure s'adapte de lui-même et le plus rapidement possible dans le cadre d'une utilisation normale.

20. Roue directrice selon l'une des revendications 15 à 19,
caractérisée en ce que le profil non-linéaire, de préférence, de courbure concave de type en anse de panier de la surface de roulement (10) ou des surfaces de roulement de la roue directrice (9) ainsi que le profil non-linéaire, de préférence, de courbure de type en anse de panier, de la surface de guidage latéral (12) ou des surfaces de guidage latéral de l'épaulement médian de la roue directrice, sont combines l'un à l'autre de telle sorte que les deux constituent une courbe, que ce soit sur une base purement non-linéaire ou sur une base linéaire/non-linéaire combinée, se confondant l'une dans l'autre de telle sorte qu'un profil commun optimal quant à sa résistance mécanique et/ou sa résistance à l'usure est obtenu et que les rayons R ou, le cas échéant, r du profil commun de courbure concave de type en anse de panier sont caractérisés, de préférence, par des rapports R/b ou, le cas échéant, R/b1 ≈ 2,4 à 3,1 et par des rapports r/b ou, le cas échéant, r/b1 ≈ 0,05 à 0,11.

21. Roue directrice selon l'une des revendications 15 à 20,
caractérisée en ce que les surfaces de roulement (10) ainsi que les surfaces de guidage latéral (12) de l'épaulement médian de la roue directrice (9) sont constituées d'acier ou de fonte de fer et en ce que les profils non-linéaires ou, le cas échéant, linéaires/non-linéaires combinées selon les revendications 15 à 20 sont mis en oeuvre par des procédés de fabrication avant, pendant ou après la fabrication de la roue directrice ou bien alors, des surfaces de roulement (10) ou, le cas échéant, des surfaces de guidage latéral (12) de l'épaulement médian ou de la zone de surface de roulement dans son entier (bandage de la roue directrice) ou, également, de la roue directrice (9) dans son entier où des parties de celle-ci sont également constituées à partir de matériaux alternatifs, de préférence, sur la base de métaux durs, de matériaux composites à charge fibreuse, de matériaux composites céramico-céramiques et/ou de céramiques techniques, de préférence, à base de Si₃N₄ (nitrure de silicium) avec moins de 15 % en poids d'additifs frittés avec augmentation de la résistance à la rupture dans la zone sous-critique avec une ténacité à la rupture KIC inférieure à 20 MPa √m, ainsi que d'autres matériaux similaires.

22. Roue directrice selon l'une des revendications 15 à 21,
caractérisée en ce que les matériaux constitutifs, les valeurs de dureté et les limites apparentes d'élasticité du matériau à partir duquel la roue directrice (9) ou une partie de la roue directrice sont constituées, correspondent à la réalisation selon les revendications 1 à 14.

23. Rouleau porteur pour l'appui et le guidage de chenilles, de chaînes de convoyage et/ou de chaînes de type similaire ainsi que des galets de roulement assurant la fonction d'entraînement avec les mécanismes de butée qui sont rendus nécessaire pour les chenilles, les chaînes de convoyage et/ou les chaînes de type et de fonction similaires,
caractérisé en ce que le profil de la surface de roulement (15, 16) ou les surfaces de roulement (15, 16) et les surfaces latérales des boudins de roue (17, 18) ainsi que le choix des matériaux sont choisis et traités de façon identique à celle qui est caractérisée dans les revendications 1 à 22.

24. Maillon de chaînes selon l'une des revendications 1 à 14,
caractérisé en ce que le profil de la surface de roulement du chaînon (3) sur la vue en coupe transversale au sommet de la surface de roulement, perpendiculairement (90 °) au sens de la marche, correspond à une fonction non-linéaire uniquement au niveau des zones de surface de roulement qui sont situées à l'extérieur par rapport à un segment de chaîne doté de deux maillons de chaîne parallèles l'un à l'autre, correspond, de préférence, à une courbe de courbure de type en anse de panier ou logarithmiquement convexe, en tant que géométrie de surface de roulement optimisée quant à sa résistance mécanique et/ou sa résistance à l'usure, de préférence, sur la demi-largeur ou jusqu'aux deux tiers de la largeur de la surface de roulement de chaque maillon de chaîne, où la forme de cette partie du profil de surface de roulement est réalisée de façon particulièrement privilégiée de telle sorte qu'elle puisse d'elle-même s'adapter au principe mécanique de base de la contrainte minimum lors d'un déplacement et d'une charge dans des conditions de fonctionnement normal entre un maillon de chaîne, en tenant compte du segment de chaîne dans son entier et en outre, par exemple, un galet de roulement en interaction avec ce segment de chaîne, lorsque la durée de déplacement est suffisamment longue.

25. Maillon de chaîne d'après l'une des revendications 1 à 24,
caractérisé en ce que le profil de la surface de roulement dans la zone de la surface de roulement dans laquelle la fonction non-linéaire n'est pas réalisée, se confond en une autre forme de courbe, de préférence, une forme de courbe linéaire ou pratiquement linéaire avec, de façon particulièrement privilégiée, une droite ou une courbe pratiquement droite, en position parallèle ou pratiquement parallèle vis-à-vis de la surface de roulement opposée (par exemple, relativement aux types de surfaces de roulement habituelles d'un galet).

26. Maillon de chaîne d'après l'une des revendications 1 à 25,
caractérisé en ce que le bord de la surface de roulement dans la zone du profil de la surface de roulement dans laquelle la fonction non-linéaire n'est pas constituée, est déterminée au moyen du rayon de transition r, de préférence, dans la combinaison paramétrique r/b ≈ 0,05 à 0,11.

27. Roue directrice selon l'une des revendications 15 à 22,
caractérisée en ce que le profil de la surface de roulement (10) ou des surfaces de roulement de la roue directrice (9) perpendiculairement (90 °) au sens de la marche, dans la section transversale, correspond à une fonction non-linéaire, de préférence, à une courbe de courbure de type en anse de panier ou logarithmiquement concave, sous l'action d'une surface opposée courbée de façon adéquate (par exemple, la surface du maillon de chaîne) en tant que géométrie optimale des surfaces de roulement quant à la résistance mécanique et/ou la résistance à l'usure, relativement à une partie, c'est-à-dire, la moitié ou, le cas échéant, les deux tiers de la surface, de préférence, à l'image inversée de la surface de roulement opposée (par exemple, celle du maillon de chaîne) ou, le cas échéant, à un profil de type image inversée ou approximativement de type image inversée (par exemple, en tenant compte de la largeur de la surface de roulement de la roue directrice) et par la façon avec laquelle le profil s'adapte de lui-même au principe mécanique de base de la contrainte minimum lors d'un mouvement normal entre une surface de roulement, par exemple, celle d'une roue directrice, et une pièce opposée qui lui correspond, par exemple, un maillon de chaîne, lorsque la durée du mouvement est suffisamment longue.

28. Galet porteur selon la revendication 23,
caractérisé en ce que celui-ci est constitué de façon analogue à la configuration selon l'une des revendications 24 à 27.
